# EUROPEAN PATENT APPLICATION

(11) **EP 4 742 038 A1**
(43) Date of publication of application: **13.05.2026**
(21) Application number: 24838716.9
(22) Date of filing: 05.07.2024
(51) Int. Cl.: G06F 11/00, G05B 19/05, G05B 23/02, G06Q 10/08, B25J 9/16, G05B 19/418

(54) **CONTROL METHOD AND CONTROL SYSTEM**

(30) Priority: 07.07.2023 CN 202310833665; 07.07.2023 CN 202310835064; 11.08.2023 CN 202311013758
(71) Applicant: Beijing Geekplus Technology Co. Ltd, Beijing 100102 (CN)
(72) Inventor: DONG, Peijun, Beijing 100102 (CN); LIU, Yunbo, Beijing 100102 (CN); XIAO, Zhaofeng, Beijing 100102 (CN)
(74) Representative: Manna, Sara
(86) International application number: PCT/CN2024/103885
(87) International publication number: WO 2025/011463

(57) **Abstract**

The embodiments of the present disclosure relate to the field of intelligent warehousing. Provided are a control method and a control system. The control system comprises at least two end-side control devices, a security verification device and a plurality of slave-station devices, wherein the at least two end-side control devices are connected to each other in series, and on the basis of the series connection manner, an output signal of a first end-side control device is sequentially transmitted through at least one second end-side control device; the second end-side control device is an end-side control device among the at least two end-side control devices that is located after the first end-side control device; after the output signal is transmitted to the last end-side control device, the last end-side control device transmits the output signal to the security verification device; and the security verification device performs security verification on the output signal and sends a control signal to the plurality of slave-station devices after the security verification is passed, and the control signal is from the output signal.

## Description

The present disclosure claims priority to Chinese patent application No. 202310835064.2 filed on July 7, 2023, the priority of Chinese patent application 202310833665.X filed on July 7, 2023, and the priority of Chinese patent application 202311013758.4 filed on August 11, 2023, the entire contents of which are incorporated by reference into the present disclosure.

### TECHNICAL FIELD

The present disclosure relates to the field of intelligent warehousing technology, and specifically to a control method and a control system.

### BACKGROUND

Automated warehousing is an intelligent warehousing mode in which autonomous mobile robots (AMR) are used to perform cargo transportation and picking. In actual implementation scenarios, a warehouse environment can accommodate hundreds or thousands of autonomous mobile robots (referred to as robots) to perform tasks together. In order to maintain the safety of each robot and to be able to intervene in an unexpected state of the robot in time, it is necessary to issue a control instruction to the robot, for example. The robot is controlled to stop suddenly by a control system, that is, the robot is controlled to enter a safe stop state. In some implementation scenarios, the control system can be triggered to transmit the control instruction to the robot by triggering a button of a pre-deployed control device.

### SUMMARY

Embodiments of the present disclosure provide a control method and a control system.

According to a first aspect of the embodiments of the present disclosure, a control method is provided. The method is applied to a control system and includes: in response to a trigger operation from a user, transmitting an output signal of a first end-side control device among the at least two end-side control devices sequentially via at least one second end-side control device, in which the output signal includes an initial control signal, the first end-side control device is an end-side control device firstly triggered among the at least two end-side control devices, or an end-side control device located after an end-side control device firstly triggered; the at least one second end-side control device includes an end-side control device located after the first end-side control device among the at least two end-side control devices; in a case where an output signal of a last end-side control device among the at least two end-side control devices is received, performing, by the security verification device, security verification on an initial control signal in the output signal of the last end-side control device; and in a case where the security verification is passed, sending, by the security verification device, a target control signal to each of the plurality of slave station devices according to the initial control signal, so that the plurality of slave station devices control respective robots according to the target control signal respectively.

In combination with the first aspect, in some embodiments, transmitting the output signal of the first end-side control device among the at least two end-side control devices sequentially via the at least one second end-side control device, includes: transmitting, by the first end-side control device, a first initial control signal and a first reset signal to a next second end-side control device adjacent to the first end-side control device; in which the first initial control signal refers to an initial control signal from another device, and the first reset signal refers to a reset signal from the other device, the other device includes a device in a previous signal transmission phase of the first end-side control device.

In combination with the first aspect, in some embodiments, in response to the trigger operation from the user, transmitting the output signal of the first end-side control device sequentially via at least one second end-side control device, includes: performing, by the first end-side control device, an AND operation on the first initial control signal and a second initial control signal to obtain the initial control signal to be output after the AND operation, in which the second initial control signal refers to an initial control signal generated by the first end-side control device in response to the trigger operation; performing, by the first end-side control device, an OR operation on the first reset signal and a second reset signal to obtain a reset signal to be output after the OR operation, in which the second reset signal refers to a reset signal generated by the first end-side control device in response to the trigger operation; and transmitting the initial control signal to be output and the reset signal to be output to the next second end-side control device adjacent to the first end-side control device, in which the output signal includes the initial control signal to be output and the reset signal to be output.

In combination with the first aspect, in some embodiments, the output signal of the at least two end-side control devices includes a first output initial control signal and a second output initial control signal; performing, by the security verification device, the security verification on the initial control signal in the output signal, includes: comparing whether a signal value of the first output initial control signal is the same as a signal value of the second output initial control signal; and in a case where the signal value of the first output initial control signal is the same as the signal value of the second output initial control signal, determining that the security verification is passed.

In combination with the first aspect, in some embodiments, the control system further includes a fault detection device, the fault detection device is connected to each end-side control device of the at least two end-side control devices and the master station device respectively; the method further includes: in a process of generating the target control signal, obtaining an intermediate state signal set of the target control signal in the control system and communication signals between the master station device and the plurality of slave station devices, in which the intermediate state signal set includes input signals and output signals of each end-side control device of the at least two end-side control devices and the master station device; detecting whether a signal corresponding to a target fault type in the intermediate state signal set and the communication signals includes an abnormal signal, in which the target fault type belongs to a preset fault type set; and in a case where the signal corresponding to the target fault type includes the abnormal signal, generating fault information according to the abnormal signal, in which the fault information includes descriptive information of the target fault type and a position of a fault in the control system.

In combination with the first aspect, in some embodiments, the preset fault type set includes: a first fault type, indicating a transmission interface fault existing in the at least two end-side control devices; a second fault type, indicating a communication connection fault between the master station device and the plurality of slave station devices; and a third fault type, indicating a control logic fault of any one of the at least two end-side control devices.

In combination with the first aspect, in some embodiments, in a case where the target fault type includes the first fault type, detecting whether the signal corresponding to the target fault type in the intermediate state signal set and the communication signals includes the abnormal signal includes: detecting whether the intermediate state signal set includes the abnormal signal, in which an input signal of each end-side control device in the intermediate state signal set includes a first input initial control signal and a second input initial control signal; detecting whether the intermediate state signal set includes the abnormal signal includes: determining whether the intermediate state signal set includes the abnormal signal based on a signal value of a first input initial control signal and a signal value of a second input initial control signal corresponding to a target device among the at least two end-side control devices and the master station device; in a case where the signal value of the first input initial control signal and the signal value of the second input initial control signal corresponding to the target device are different, determining that the intermediate state signal set includes the abnormal signal, and determining the signal value of the first input initial control signal and/or the second input initial control signal as an abnormal signal in a signal corresponding to the first fault type.

In combination with the first aspect, in some embodiments, generating fault information according to the abnormal signal includes: generating first fault information according to the abnormal signal in the signal corresponding to the first fault type, in which the first fault information includes descriptive information of the first fault type and a first fault position; in which the descriptive information of the first fault type is that an interface is disconnected, and the first fault position includes an input interface of the target device and an output interface of a pervious-level device of the target device.

In combination with the first aspect, in some embodiments, in a case where the target fault type comprises the second fault type, detecting whether the signal corresponding to the target fault type in the intermediate state signal set and the communication signals includes the abnormal signal includes: detecting whether the communication signals include the abnormal signal;
detecting whether the communication signals include the abnormal signal includes: in a case where a signal value of a communication signal between the master station device and a slave station device reaches a first preset threshold, determining that the communication signals include the abnormal signal.

In combination with the first aspect, in some embodiments, generating the fault information according to the abnormal signal includes: generating second fault information according to an abnormal signal in a signal corresponding to the second fault type, in which the second fault information includes the number of slave station devices with abnormal communication signals and identifications of the slave station devices with abnormal communication signals.

In combination with the first aspect, in some embodiments, in a case where the target fault type includes the third fault type, detecting whether the signal corresponding to the target fault type includes the abnormal signal includes: in a case where there is no abnormality in the input signals of the at least two end-side control devices and the at least two end-side control devices have no output signal, determining that the signal corresponding to the target fault type includes the abnormal signal.

In combination with the first aspect, in some embodiments, the target fault type includes at least one of the first fault type, the second fault type, or the third fault type.

In combination with the first aspect, in some embodiments, the method further includes: after generating an emergency stop signal and a reset signal, performing, by the master station device, delay processing on the reset signal according to a preset delay duration to obtain a delayed reset signal, in which the output signal includes the emergency stop signal and the reset signal; sending, by the master station device, a target emergency stop signal to the plurality of slave station devices, so that the plurality of slave station devices respectively perform emergency stop control according to a preset duration, in which the target emergency stop signal is obtained according to the emergency stop signal, and the target control signal includes the target emergency stop signal; and in a case where a signal value of the emergency stop signal meets a reset trigger condition, responding, by the master station device and the plurality of slave station devices, to the delayed reset signal to reset.

In combination with the first aspect, in some embodiments, the preset delay duration is greater than or equal to 1 second.

In combination with the first aspect, in some embodiments, for a slave station device among the plurality of slave station devices, performing the emergency stop control according to a preset duration includes: controlling, by the station slave station device, the target emergency stop signal to be effectively executed for a time period reaching the preset duration, in which the preset duration is a sum of a duration of an emergency stop buffer delay and a duration during which the slave station device enters an emergency stop state.

In combination with the first aspect, in some embodiments, controlling, by the slave station device, the target emergency stop signal to be effectively executed for the time period reaching the preset duration includes: controlling, by the slave station device, the target emergency stop signal to be maintained at a low level state for the preset duration, so that the target emergency stop signal is effectively executed.

In combination with the first aspect, in some embodiments, the emergency stop signal includes a first channel emergency stop signal and a second channel emergency stop signal; a signal value of the emergency stop signal meeting a reset trigger condition includes: both the first channel emergency stop signal and the second channel emergency stop signal being high level signals.

In combination with the first aspect, in some embodiments, the method further includes: in response to the trigger operation from the user, obtaining, by at least one end-side control device of the at least two end-side control devices, a first initial emergency stop signal, a second initial emergency stop signal, and an initial reset signal; transmitting, by the at least one end-side control device, the first initial emergency stop signal, the second initial emergency stop signal and the initial reset signal to the master station device through three channels in an order of series connection, in which the first channel emergency stop signal includes the first initial emergency stop signal generated by the at least one end-side control device, the second channel emergency stop signal includes the second initial emergency stop signal generated by the at least one end-side control device, and the reset signal includes the initial reset signal generated by the at least one end-side control device.

In combination with the first aspect, in some embodiments, the method further includes: in a case where a signal value of the first channel emergency stop signal and a signal value of the second channel emergency stop signal are the same, delaying the reset signal according to the preset delay duration.

According to a second aspect of the embodiments of the present disclosure, a control system is provided. The control system includes: at least two end-side control devices, a master station device and a plurality of slave station devices, in which the master station device includes a security verification device; the at least two end-side control devices are connected to each other in series, in which an output signal of a first end-side control device is sequentially transmitted via at least one second end-side control device, and the output signal includes an initial control signal, the first end-side control device is an end-side control device firstly triggered among the at least two end-side control devices, or an end-side control device located after an end-side control device firstly triggered; the at least one second end-side control device includes an end-side control device located after the first end-side control device among the at least two end-side control devices; the security verification device is connected to a last end-side control device among the at least two end-side control devices by wire, and is connected to the plurality of slave station devices wirelessly; the security verification device is configured to perform security verification on an initial control signal in an output signal of the last end-side control device, and send a target control signal to each of the plurality of slave station devices after the security verification passes.

In combination with the second aspect, in some embodiments, the at least two end-side control devices are connected to each other in series by way of the at least two end-side control devices being connected in sequence via a logic circuit; the security verification device is connected to the last end-side control device by wire by way of the security verification device being connected to the last end-side control device via a logic circuit.

In combination with the second aspect, in some embodiments, the logic circuit includes an AND gate circuit and an OR gate circuit; an input end of the AND gate circuit is connected to an output port of a first initial control signal of an input device, and an output end of the AND gate circuit is connected to an input port of the first initial control signal of an output device, in which the first initial control signal refers to an initial control signal from another device; an input end of the OR gate circuit is connected to an output port of a first reset signal of the input device, and an output end of the OR gate circuit is connected to an input port of the first reset signal of the output device, in which the first reset signal refers to a reset signal from the other device; in which, the input device is any one of the at least two end-side control devices, the output device is a device among the at least two end-side control devices and the security verification device that receives a signal output by the input device, and the other device comprises a device in a previous signal transmission phase of the input device.

In combination with the second aspect, in some embodiments, the input end of the AND gate circuit is further connected to an output port of a second initial control signal of the input device, the input end of the OR gate circuit is further connected to an output port of a second reset signal of the input device, the second initial control signal refers to an initial control signal generated by the input device, and the second reset signal refers to a reset signal generated by the input device.

In combination with the second aspect, in some embodiments, the control system further includes a fault detection device, the fault detection device is respectively connected to each end-side control device of the at least two end-side control devices and the master station device; the fault detection device is configured to obtain an intermediate state signal set of the target control signal in the control system and communication signals between the master station device and the plurality of slave station devices, in which the target control signal is obtained based on the initial control signal, and the intermediate state signal set includes input signals and output signals of each end-side control device of the at least two end-side control devices and the master station device; the fault detection device is further configured to detect whether a signal corresponding to a target fault type in the intermediate state signal set and the communication signals includes an abnormal signal, in which the target fault type belongs to a preset fault type set; and the fault detection device is further configured to generate fault information according to the abnormal signal in a case where the signal corresponding to the target fault type includes the abnormal signal, in which the fault information includes descriptive information of the target fault type and a position of a fault in the control system.

In combination with the second aspect, in some embodiments, the master station device is configured to, after generating an emergency stop signal and a reset signal, perform processing on the reset signal according to a preset delay duration to obtain a delayed reset signal, and send a target emergency stop signal to at least two slave station devices; in which the target emergency stop signal is obtained according to the emergency stop signal, and the target control signal includes the target emergency stop signal; and a slave station device is configured to receive the target emergency stop signal sent by the master device, and perform emergency stop control according to a preset duration; the master station device and the slave station device are further configured to respond to the delayed reset signal to reset in a case where a signal value of the emergency stop signal meets a reset trigger condition.

According to a third aspect of the embodiments of the present disclosure, a control apparatus is provided. The control apparatus includes a responding module, a receiving module, a verifying module and a sending module. The responding module is configured to, in response to a trigger operation from a user, transmit an output signal of a first end-side control device among the at least two end-side control devices sequentially via at least one second end-side control device, in which the output signal includes an initial control signal, the first end-side control device is an end-side control device firstly triggered among the at least two end-side control devices, or an end-side control device located after an end-side control device firstly triggered; the at least one second end-side control device includes an end-side control device located after the first end-side control device among the at least two end-side control devices. The receiving module is configured to receive an output signal of a last end-side control device among the at least two end-side control devices. The verifying module is configured to, in a case where an output signal of a last end-side control device among the at least two end-side control devices is received, perform security verification on an initial control signal in the output signal of the last end-side control device. The sending module is configured to, in a case where the security verification is passed, send a target control signal to each of the plurality of slave station devices according to the initial control signal, so that the plurality of slave station devices control respective robots according to the target control signal respectively.

According to a fourth aspect of the embodiments of the present disclosure, an electronic device is provided, including: a memory and a processor. The memory is configured to store computer-readable instructions. The processor is configured to read and execute the computer-readable instructions to perform the steps of the method of the above second aspect and any implementation of the above second aspect.

According to a fifth aspect of the embodiments of the present disclosure, a computer-readable storage medium is provided, having computer instructions stored thereon. When the computer instructions are configured to cause a computer to perform the method of the above second aspect and any implementation of the above second aspect.

Further, the embodiments of the present disclosure further provide a computer program product having a computer program stored on a computer-readable storage medium. The computer program includes program instructions. When the program instructions are executed by a computer, the computer is caused to perform the method of the above second aspect and any implementation of the above second aspect.

The control system provided by the embodiments of the present disclosure includes at least two end-side control devices, a security verification device and multiple slave station devices. The at least two end-side control devices are connected to each other in series. Based on the series connection mode, the output signal of the first end-side control device is transmitted in sequence via at least one second end-side control device. The first end-side control device is an end-side control device firstly triggered among the at least two end-side control devices, or an end-side control device after the end-side control device firstly triggered; the second end-side control device is an end-side control device located after the first end-side control device among the at least two end-side control devices. After the output signal is transmitted to the last end-side control device, the last end-side control device transmits the output signal to the security verification device, the security verification device performs security verification on the output signal, and sends a control signal to multiple slave station devices after the safety verification is passed, and the control signal comes from the output signal. In this way, at least two end-side control devices are connected to each other in series, and the last end-side control device is connected to the security verification device. The control signals generated by any one or more of the at least two end-side control devices may be transmitted sequentially based on the series relationship, and finally transmitted to the security verification device for security verification, which allows one security verification device to be deployed for at least two end-side control devices deployed at different locations in a warehousing environment, to achieve security verification of the control signal of any end-side control device, without deploying security verification devices in a one-to-one correspondence with the at least two end-side control devices, thereby avoiding the increase of complexity of the control system and the increase of costs.

### BRIEF DESCRIPTION OF THE DRAWINGS

In order to more clearly illustrate technical solutions of the embodiments of the present disclosure, the drawings required in the embodiments will be briefly introduced below. Obviously, the drawings described below are only some embodiments of the embodiments of the present disclosure. For ordinary technicians in the art, other drawings can be obtained based on these drawings without creative work.
FIG. 1 is a schematic diagram of a control system according to an embodiment of the present disclosure;
FIG. 2A is a flowchart of a control method according to an embodiment of the present disclosure;
FIG. 2B is a flowchart of a control method according to an embodiment of the present disclosure;
FIG. 2C is a flowchart of a control method according to an embodiment of the present disclosure;
FIG. 2D is a flowchart of a control method according to an embodiment of the present disclosure;
FIG. 2E is a flowchart of a control method according to an embodiment of the present disclosure;
FIG. 2F is a flowchart of a control method according to an embodiment of the present disclosure;
FIG. 3A is a schematic diagram of a programmable logic controller (PLC) system according to an embodiment of the present disclosure;
FIG. 3B is a schematic diagram of a PLC system according to an embodiment of the present disclosure;
FIG. 4A is a schematic diagram of a logic circuit in a PLC system according to an embodiment of the present disclosure;
FIG. 4B is a schematic diagram of a signal collection scenario in a PLC system according to an embodiment of the present disclosure;
FIG. 4C is a schematic diagram of a reset processing logic scenario in a PLC system according to an embodiment of the present disclosure;
FIG. 5 is a block diagram of a control apparatus according to an embodiment of the present disclosure; and
FIG. 6 is a block diagram of an electronic device according to an embodiment of the present disclosure.

### DETAILED DESCRIPTION

In order to enable those skilled in the art to better understand technical solutions in the embodiments of the present disclosure and to make the above-mentioned purposes, features and advantages of the embodiments of the present disclosure more obvious and understandable, the technical solutions in the embodiments of the present disclosure are further described in detail below in combination with the accompanying drawings.

Although the embodiments of the present disclosure are shown in the drawings, it should be understood that the present disclosure can be implemented in various forms and should not be limited by the embodiments described herein. On the contrary, these embodiments are provided to enable a more thorough understanding of the present disclosure and to fully convey the scope of the present disclosure to those skilled in the art.

It should be noted that, unless otherwise specified, the technical terms or scientific terms used in the embodiments of the present disclosure should have the common meanings understood by those technicians in the technical field to which the embodiments of the present disclosure belong.

Automated warehousing is an intelligent warehousing mode in which autonomous mobile robots (AMR) are used to perform cargo transportation and picking. The AMR may be referred to as "robot" for short. In actual implementation scenarios, a warehouse environment can accommodate hundreds or thousands of autonomous mobile robots to perform tasks together. In order to maintain the safety of each robot and to be able to intervene in an unexpected state of the robot in time, it is necessary to issue a control instruction to the robot, for example. The robot is controlled to stop suddenly by a control system, that is, the robot is controlled to enter a safe stop state. In some implementation scenarios, the control system can be triggered to transmit the control instruction to the robot by triggering a button of a pre-deployed control device.

In some embodiments, since the warehousing environment has a large space and there are usually hundreds or thousands of robots moving around in the warehousing environment, in order to facilitate sending control instructions to hundreds or thousands of robots, multiple control devices may usually be deployed at different locations in the warehousing environment, and each control device may independently and directly transmit the control instruction to the robot through wireless communication. Since a security communication standard should be met when transmitting the control instruction to the robot through the wireless communication, it is required to deploy a system for performing securely verification on the instructions for each control device. However, for multiple control devices deployed in a dispersed manner, a one-to-one deployment of the security verification systems will not only increase complexity of the control system, but also increase the costs.

In other embodiments, since the control system performs multiple signal transmissions and processing from a time of responding to a user's trigger operation to a time of issuing the control instruction to the robot, and multiple devices are involved in the signal transmission and processing process, it is difficult to detect a location and a cause of a fault when the control system fails.

In some other embodiments, after completing an emergency stop control, emergency stop function modules of the control system and the robot should perform a reset operation to release the emergency stop, and then execute a next emergency stop control after releasing the emergency stop. That is, the emergency stop function modules of the control system and the robot should trigger an emergency stop operation first, and then perform a reset operation. However, in some implementation scenarios, after the control system responds to the user's trigger operation, the output signal includes both an emergency stop signal and a reset signal, and a time period for some control systems to generate the emergency stop signal and a time period for those control systems to generate the reset signal are close. In this way, the emergency stop function modules of the control system and the robot may not be able to correctly identify the emergency stop signal and the reset signal and thus fail to perform the emergency stop control first, which may cause the emergency stop control of the robot to fail, thereby affecting a control effect of the robot and causing certain safety hazards.

The control system of the embodiments of the present disclosure will be described below with reference to examples.

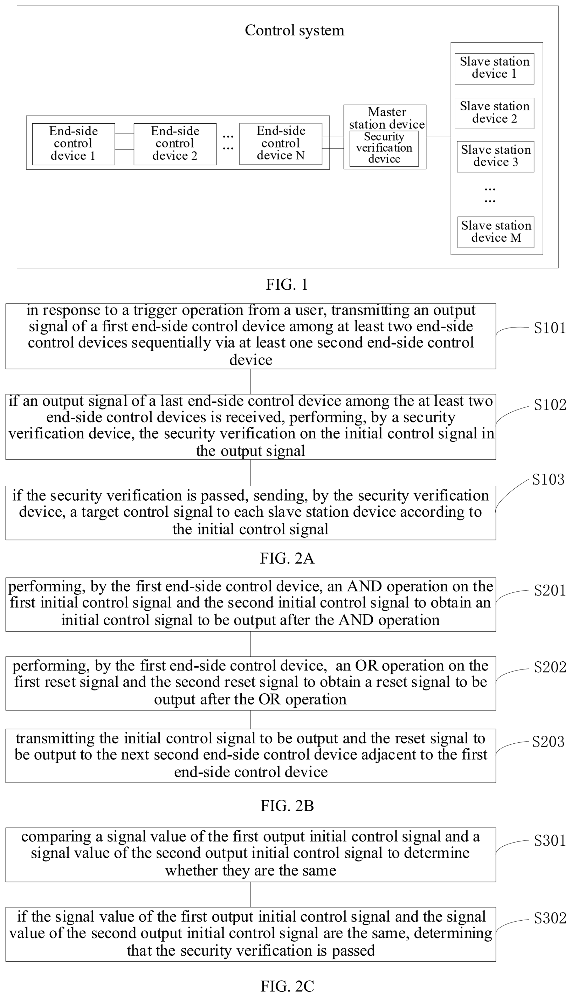

As shown in FIG. 1, an embodiment of the present disclosure provides a control system (also called AMR control system), which may include at least two end-side control devices, a mater station device and a plurality of slave station devices. The at least two end-side control devices and the master station device may be connected in series; for example, at least two end-side control devices and the master station device may be connected in series according to a multistage series structure in a signal transmission direction, and the master station device and plurality of slave station devices may be connected in parallel. The end-side control device may also be referred to as a front-end device or a signal generating device, which may be used to generate an emergency stop signal, and may also be referred to as an emergency stop signal generating device. The master station device may also be referred to as a master control device, and the slave station device may also be referred to as a robot control device or a controlled device.

For example, the at least two end-side control devices may be electrically connected to the master station device, the master station device may be wirelessly connected to each of the plurality of slave station devices, and the slave station device may be deployed in a robot.

In some embodiments, based on the series connection structure between at least two end-side control devices, an output signal of a first end-side control device among the at least two end-side control devices may be transmitted sequentially via at least one second end-side control device until the output signal is output to the master station device by a last end-side control device among the at least two end-side control devices. The first end-side control device is an end-side control device firstly triggered among the at least two end-side control devices, or an end-side control device after the end-side control device firstly triggered. The second end-side control device is an end-side control device located after the first end-side control device among the at least two end-side control devices.

For example, if there are N end-side control devices and M slave station devices, then M and N are both integers greater than or equal to 2. The output signal of the i-th end-side control device (also referred to as the first end-side control device) among the N end-side control devices may be transmitted sequentially via N-i end-side control devices (each of the N-i end-side control devices can also be referred to as the second end-side control device) until the output signal of the i-th end-side control device is output to the master station device via the N-th end-side control device (also referred to as the last end-side control device) among the N end-side control devices, where i is greater than or equal to 1 and less than or equal to N-1.

In some embodiments, the output signal of the i-th end-side control device may include an initial control signal. Any end-side control device among the N end-side control devices is correspondingly provided with a trigger button. After the user triggers the trigger button, the end-side control device corresponding to the trigger button may respond to the user's trigger operation, and the initial control signal may be generated under the action of components such as raster and shielding sensors in the end-side control device. After the end-side control device generates the initial control signal, it may transmit the generated initial control signal to a next-level end-side control device of the end-side control device, and the next-level end-side control device continues to transmit the initial control signal to the end-side control device step by step until the initial control signal is transmitted to the master station device. For example, the i-th end-side control device transmits the generated initial control signal to the (i+1)-th end-side control device, and the (i+1)-th end-side control device transmits the generated initial control signal backward in sequence until the generated initial control signal is transmitted to the N-th end-side control device, and finally to the master station device. Since N end-side control devices are connected in series, when the (i-1)-th end-side control device generates an initial control signal in response to the user's trigger operation, the (i-1)-th end-side control device may transmit the initial control signal to the i-th end-side control device, and the i-th end-side control device may transmit the initial control signal backward in sequence until the initial control signal is transmitted to the N-th end-side control device, and finally transmitted to the master station device. In this way, it can be known that the output signal of the i-th end-side control device may be the output signal of the (i-1)-th end-side control device received by the i-th end-side control device, or may also be the signal generated by the i-th end-side control device in response to the user's trigger operation, or may also include the signal generated by the user trigger button received by the i-th end-side control device and the output signal of the i-1th end-side control device, which is not limited in the embodiments of the present disclosure.

For example, if N is 150, the number of end-side control devices is 150; the 150 end-side control devices are connected in series, that is, in any two connected end-side control devices, the output signal of a previous end-side control device may be input to another end-side control device connected to the previous end-side control device. According to the signal transmission direction, if i is 50, the output signal of the 50th end-side control device among the 150 end-side control devices may be transmitted to the 51st end-side control device, and the output signal of the 51st end-side control device may be transmitted to the 52nd end-side control device, and so on, until the signal is transmitted to the 150th end-side control device. It can be understood that when i is any value from 1 to 149, the signal transmission between the end-side control devices will be similar to the above description, which will not be repeated here.

It can be understood that by connecting N end-side control devices in series, the end-side control device among the N end-side control devices may transmit the output signal to the next end-side control device using the series structure as a transmission path, thereby enabling the output signals of any one or more dispersed end-side control devices to be transmitted on one path.

The control system provided by the embodiments of the present disclosure may be used for security verification, also may be used for fault detection, and also may be used for emergency stop and reset. The control system provided by the embodiments of the present disclosure may realize at least one of the security verification, the fault detection, or the emergency stop and reset. For example, in some implementation scenarios, the control system provided by the embodiments of the present disclosure may be used for both the security verification and the emergency stop and reset; in other implementation scenarios, the control system provided by the embodiments of the present disclosure may be used for both the security verification and the fault detection; in some other implementation scenarios, the control system provided by the embodiments of the present disclosure may be used for the security verification, the fault detection, and the emergency stop and reset.

In some embodiments, when the control system is used for the security verification, the master station device in the control system is equipped with a security verification device. As shown in FIG. 1, the master station device includes the security verification device, and the security verification device is connected in series with the last end-side control device of the at least two end-side control devices, and the security verification device may be wirelessly connected to multiple slave station devices respectively.

For example, the security verification device is connected by wire to the N-th end-side control device among N end-side control devices, and the security verification device is configured to perform security verification on the initial control signal in the output signal of the last end-side control device, and send the target control signal to each slave station device after the security verification passes. That is, the security verification is performed on the initial control signal in the output signal of the N-th end-side control device, and the target control signal is sent to each of M slave station devices after the security verification passes. The target control signal may represent the control signal triggered by the user's intention, and the initial control signal refers to the target control signal that has not been subject to the security verification. Before the master station device sends the target control signal to the slave station device, the signals transmitted between the end-side control devices are all initial control signals.

In some embodiments, the initial control signal includes a first channel initial control signal and a second channel initial control signal, and the first channel initial control signal and the second channel initial control signal are transmitted through two channels respectively. The first channel initial control signal includes a first output initial control signal and a first input initial control signal, and the second channel initial control signal includes a second output initial control signal and a second input initial control signal.

It should be noted that the first output initial control signal and the second output initial control signal are output signals of the end-side control device, and the first input initial control signal and the second input initial control signal are input signals of the end-side control device. For two adjacent end-side control devices, the first output initial control signal of the i-th end-side control device is the first input initial control signal of the (i+1)-th end-side control device, and the second output initial control signal of the i-th end-side control device is the second input initial control signal of the (i+1)-th end-side control device.

In some embodiments, after receiving the first input initial control signal and the second input initial control signal, the master station device may detect whether a signal value of the first input initial control signal and a signal value of the second input initial control signal are the same, so as to perform the security verification on the initial control signal. The first input initial control signal and the second input initial control signal are transmitted by the end-side control device directly connected to the master station device, that is, the first input initial control signal and the second input initial control signal may be transmitted by the last end-side control device among the N end-side control devices to the master station device. If the signal value of the first input initial control signal and the signal value of the second input initial control signal are the same, the security verification is passed, and the master station device sends the target control signal to each of the M slave station devices. After receiving the target control signal sent by the security verification device, each of the M slave station devices may respond to the target control signal and control the corresponding robot to perform corresponding operations respectively.

For example, a user may trigger at least one of the N end-side control devices to output the initial control signal to the master station device. After the security verification on the initial control signal is passed, the master station device sends the target control signal to the M slave station devices to trigger the control of the robots corresponding respectively to the slave station devices. That is, after the master station device performs the security verification on the first input initial control signal and the second input initial control signal transmitted by the last end-side control device among the N end-side control devices, the master station device sends the first input initial control signal or the second input initial control signal as the target control signal to each slave station device in the form of a wireless signal, so as to control the corresponding robot via each slave station device.

In some embodiments, the control system provided by the embodiments of the present disclosure may be a programmable logic controller (PLC) system. N end-side control devices, and the N-th end-side control device and the security verification device may be connected in sequence using logic circuits.

For example, the output signal of any of the N end-side control devices may include an initial control signal and a reset signal. The logic circuit may include an AND gate circuit and an OR gate circuit. An input end of the AND gate circuit is connected to an output port of a first initial control signal of the input device, an output end of the AND gate circuit is connected to an input port of the first initial control signal in the output device. An input end of the OR gate circuit is connected to an output port of a first reset signal of the input device, and an output end of the OR gate circuit is connected to an input port of the first reset signal in the output device.

The input device may be any one of the N end-side control devices; for example, the input device may be the i-th end-side control device. The output device is a device that receives a signal from the input device and that is among the N end-side control devices and the security verification device. For example, if the input device is the i-th end-side control device, since i is less than or equal to N-1, the output device is the (i+1)-th end-side control device. For another example, if the input device is the N-th end-side control device, the output device is the security verification device.

In some embodiments, the first initial control signal refers to an initial control signal from another device. The first reset signal refers to a reset signal from another device. The other device may be a device in a previous signal transmission phase of the input device, that is, the first initial control signal and the first reset signal may be signals output by the other device to the corresponding input device.

In other embodiments, the input end of the AND gate circuit is also connected to an output port of a second initial control signal of the input device. The input end of the OR gate circuit is also connected to an output port of a second reset signal of the input device.

For example, the input device may include a button, and the user performs a trigger operation by pressing the button, and the input device may generate a corresponding initial control signal or reset signal in response to the user's trigger operation. It should be noted that in the embodiments of the present disclosure, the second initial control signal refers to the initial control signal generated by the input device, and the second reset signal refers to the reset signal generated by the input device.

In some embodiments, a logic circuit may be independent of the N end-side control devices and connected to each device in series. The logic circuit may also be deployed in each end-side control device. The embodiments of the present disclosure are not limited thereto; the embodiments of the present disclosure will be described by taking the logic circuit deployed in the end-side control device as an example, so that the input device of the logic circuit is the end-side control device where the logic circuit is deployed.

In the embodiments of the present disclosure, N end-side control devices are connected to each other in series, and the N-th end-side control device is connected to the security verification device. The output signals of any one or more of the N end-side control devices may be transmitted sequentially based on the series relationship between the N end-side control devices, and finally transmitted to the security verification device for the security verification. In this way, for N end-side control devices dispersedly deployed at different locations in a warehousing environment, one security verification device is deployed to realize the security verification of the control signal (such as the initial control signal) output by any end-side control device, without the need to deploy the security verification devices in one-to-one correspondence with the end-side control devices, which does not increase the complexity of the control system and does not increase the cost.

In some embodiments, when the control system provided by the embodiments of the present disclosure is used for the fault detection, the control system may further include a fault detection device (not shown in FIG. 1). The fault detection device is respectively connected to each end-side control device and the master station device to detect each end-side control device and/or the master station device.

The fault detection device is configured to obtain an intermediate state signal set of the target control signal in the control system, as well as communication signals between the master station device and a plurality of slave station devices. The target control signal is obtained based on the initial control signal, and the intermediate state signal set includes input signals and output signals of each end-side control device in the at least two end-side control devices and the master station device.

In some embodiments, the fault detection device is further configured to detect whether a signal corresponding to a target fault type in the intermediate state signal set and the communication signals contains an abnormal signal. The target fault type belongs to a preset fault type set.

In other embodiments, the fault detection device is further configured to generate fault information based on the abnormal signal if the signal corresponding to the target fault type contains the abnormal signal. The fault information includes descriptive information of the target fault type and a position of a fault in the control system.

In some embodiments, when the control system provided by the embodiments of the present disclosure is used for the emergency stop and reset, the master station device in the control system may be configured to perform delay processing on a reset signal according to a preset delay duration after generating an emergency stop signal and the reset signal, to obtain a delayed reset signal, and send a target emergency stop signal to at least two slave station devices. The target emergency stop signal is obtained based on the emergency stop signal, and the target control signal includes the target emergency stop signal. The slave station device is configured to receive the target emergency stop signal sent by the master station device, and perform emergency stop control according to a preset duration. The master station device and the slave station device are also configured to respond to the delayed reset signal to reset if a signal value of the emergency stop signal meets a reset trigger condition.

For example, the control signal includes the emergency stop signal, in which the terminal control device may generate the emergency stop signal and the reset signal in response to the trigger operation from the user pressing a button, and transmit the emergency stop signal and the reset signal to the master station device according to the series structure between multiple end-control devices.

It should be noted that both the emergency stop signal and the reset signal may be generated based on the user's trigger operation, that is, the emergency stop signal and the reset signal may be generated at the same time. However, in actual scenarios, the control system may first trigger the execution of the emergency stop control based on the emergency stop signal, and then perform the reset operation based on the reset signal to eliminate an emergency stop control status of a related device before triggering the next emergency stop control.

In some embodiments, when the control system provided by the embodiments of the present disclosure may be used for both the security verification and the emergency stop and reset, the master station device in the control system may be equipped with a security verification device, which is configured to perform the security verification on the emergency stop signal generated by the end-side control device. After the security verification is passed, a target control signal (also referred to as an emergency stop control signal) is sent to each of multiple slave station devices, and each of the multiple slave station devices respond to the target control signal transmitted by the master station device to perform corresponding operations. At the same time, the master station device may also be configured to detect whether the emergency stop signal reaches the reset trigger condition. If the emergency stop signal reaches the reset trigger condition, the master station device and multiple slave station devices may respond to the delayed reset signal to reset, so as to release the emergency stop state. That is, the master station device may not only perform the security verification, processing, detection, etc. on the signal (such as an emergency stop signal) generated by the end-side control device in the control system, but also further process the signal that meets the condition, and may also respond to the signal (such as delayed reset signal) to perform corresponding operations. Each of the multiple slave station devices may control the robot to perform the emergency stop or the reset operation.

Corresponding to the control system provided in the embodiments of the present disclosure, the control methods for the security verification, the fault detection and the emergency stop and reset of the control system will be described in the following embodiments with reference to examples.

In some embodiments, FIG. 2A is a flow chart of a control method provided by an embodiment of the present disclosure. The control method is applied to the control system shown in FIG. 1, and the control method may be used for the security verification. As shown in FIG. 2A, the method includes steps S101 to S103.

In step S101, in response to a trigger operation from a user, an output signal of a first end-side control device among at least two end-side control devices is sequentially transmitted via at least one second end-side control device.

The output signal includes an initial control signal and a reset signal. The first end-side control device (also referred to as the i-th end-side control device) is an end-side control device firstly triggered among the at least two end-side control devices, or an end-side control device after the end-side control device firstly triggered. The second end-side control device (i.e., an end-side control device after the i-th end-side control device) is an end-side control device located after the first end-side control device among the at least two end-side control devices.

For example, the initial control signal included in the output signal of any device may include a first output initial control signal and a second output initial control signal. The first output initial control signal and the second output initial control signal are initial control signals transmitted by two transmission channels, respectively. For example, the output signal of the i-th end-side control device may include a first output initial control signal output through a first transmission channel and a second output initial control signal output through a second transmission channel.

It should be noted that regarding the i-th end-side control device in the embodiments of the present disclosure, and the relationship between the values of i and N, reference may be made to the scenario shown in FIG. 1, which will not be described in detail here. In conjunction with the control system shown in FIG. 1, in some embodiments, according to a signal transmission direction, the i-th end-side control device may be the end-side control device firstly triggered among the N end-side control devices, or may be the end-side control device after the end-side control device firstly triggered.

In some embodiments, transmitting the output signal of the first end-side control device among the at least two end-side control devices sequentially via at least one second end-side control device, includes: transmitting by the first end-side control device a first initial control signal and a first reset signal to a next second end-side control device (also referred to as the (i+1)-th end-side control device) adjacent to the first end-side control device. The first initial control signal refers to an initial control signal from another device, and the first reset signal refers to a reset signal from another device. The other device includes a device in a previous signal transmission phase of an input device, and the input device is any end-side control device among the at least two end-side control devices.

For example, if the i-th end-side control device is a device after the firstly triggered end-side control device, and the i-th end-side control device is not triggered, the i-th end-side control device transmits the first initial control signal and the first reset signal to the (i+1)-th end-side control device, and the (i+1)-th end-side control device transmits the output signal of the i-th end-side control device to the (i+2)-th end-side control device, and so on, until the output signal is transmitted to the N-th end-side control device.

In some embodiments, transmitting the output signal of the first end-side control device among the at least two end-side control devices sequentially via the at least one second end-side control device may further include: transmitting by the first end-side control device a second initial control signal and a second reset signal to the next second end-side control device adjacent to the first end-side control device. The second initial control signal refers to the initial control signal generated by the first end-side control device in response to the trigger operation from the user, and the second reset signal refers to the reset signal generated by the first end-side control device in response to the trigger operation from the user.

For example, if the i-th end-side control device is the end-side control device firstly triggered, the i-th end-side control device transmits the second initial control signal and the second reset signal to the (i+1)-th end-side control device, and the (i+1)-th end-side control device transmits them backward in sequence until they are transmitted to the N-th end-side control device.

As shown in FIG. 2B, in some embodiments, if the first end-side control device receives the trigger operation from the user, transmitting the output signal of the first end-side control device sequentially via the at least one second end-side control device includes steps S201 to S203.

At step S201, the first end-side control device performs an AND operation on the first initial control signal and the second initial control signal to obtain an initial control signal to be output after the AND operation.

At step S202, the first end-side control device performs an OR operation on the first reset signal and the second reset signal to obtain a reset signal to be output after the OR operation.

At step S203, the initial control signal to be output and the reset signal to be output are transmitted to the next second end-side control device adjacent to the first end-side control device.

Both the initial control signal to be output and the reset signal to be output may be considered as output signals of the corresponding end-side control device, that is, the output signal includes the initial control signal to be output and the reset signal to be output.

For example, if the i-th end-side control device is a device after the firstly triggered end-side control device, and the i-th end-side control device has been triggered, the i-th end-side control device may receive the first initial control signal and the first reset signal transmitted by another device, and generate the second initial control signal and the second reset signal. In this case, the i-th end-side control device performs the AND operation on the first initial control signal and the second initial control signal to obtain the initial control signal to be output after the AND operation, and performs the OR operation on the first reset signal and the second reset signal to obtain the reset signal to be output after the OR operation. After obtaining the initial control signal to be output and/or the reset signal to be output, the i-th end-side control device transmits the initial control signal to be output and/or the reset signal to be output to the (i+1)-th end-side control device, and then the (i+1)-th end-side control device transmits the signal backward in sequence until the signal is transmitted to the N-th end-side control device.

At step S102, if an output signal of a last end-side control device among the at least two end-side control devices is received, a security verification device performs the security verification on the initial control signal in the output signal.

For example, if the output signal of the N-th end-side control device is received, the security verification device performs the security verification on the initial control signal in the output signal of the N-th end-side control device.

**In** combination with the description of the control system shown in FIG. 1A in the above embodiments, it can be seen that the N-th end-side control device refers to the last end-side control device among the N end-side control devices connected in series, and the N-th end-side control device is connected to the security verification device. Accordingly, after the N-th end-side control device obtains any signal, the signal may be outputted to the security verification device.

In some embodiments, the output signal of the N-th end-side control device is similar to the implementation of the output signal of the N-th end-side control device, that is, the output signal of the N-th end-side control device includes the initial control signal and the reset signal.

The initial control signal may include at least one of the initial control signal inputted by the (N-1)-th end-side control device, the initial control signal generated by the N-th end-side control device, or the initial control signal to be output obtained after the AND operation. The reset signal may include the reset signal inputted by the (N-1)-th end-side control device, the reset signal generated by the N-th end-side control device, or the reset signal to be output after the OR operation.

In some embodiments, according to the description of the initial control signal in the above embodiments, the initial control signal includes a first output initial control signal and a second output initial control signal. As shown in FIG. 2C, the security verification device performing the security verification on the initial control signal in the output signal includes steps S301-S302.

At step S301, a signal value of the first output initial control signal and a signal value of the second output initial control signal are compared to determine whether they are the same.

At step S302, if the signal value of the first output initial control signal and the signal value of the second output initial control signal are the same, it is determined that the security verification is passed.

**In** some embodiments, the signal value of the first output initial control signal represents a level of the first output initial control signal, and the signal value of the second output initial control signal represents a level of the second output initial control signal. That is, the security verification device may compare whether the level of the first output initial control signal and the level of the second output initial control signal are the same to perform the security verification. If the level of the first output initial control signal and the level of the second output initial control signal are the same, it indicates that the security verification is passed.

For example, the security verification device may compare whether a moment of a rising edge of the first output initial control signal is the same as a moment of a rising edge of the second output initial control signal, or the security verification device may compare whether a moment of a falling edge of the first output initial control signal is the same as a moment of a falling edge of the second output initial control signal, to determine whether the level of the first output initial control signal is the same as the level of the second output initial control signal.

At step S103, if the security verification is passed, the security verification device sends a target control signal to each slave station device according to the initial control signal.

The target control signal may be the first output control signal or the second output initial control signal after the security verification is passed.

In some embodiments, if the security verification is passed, the security verification device sends the target control signal to each of the M slave station devices according to the initial control signal. The security verification device may send the control signal to each of the M slave station devices through a common industrial protocol safety (CIPsafety) protocol in a wireless Ethernet manner, so that the M slave station devices control the corresponding robots respectively according to the target control signal.

In the embodiments of the present disclosure, one or more target control signals generated by any one or more of the N end-side control devices may be transmitted sequentially based on the series relationship between the N end-side control devices, and finally transmitted to the security verification device for the security verification. In this way, for N end-side control devices deployed at different locations in a warehousing environment, one security verification device is deployed to realize the security verification of the control signal outputted by any end-side control device, without the need to deploy security verification devices in one-to-one correspondence with the end-side control devices, which will not increase the complexity of the control system and will not increase costs.

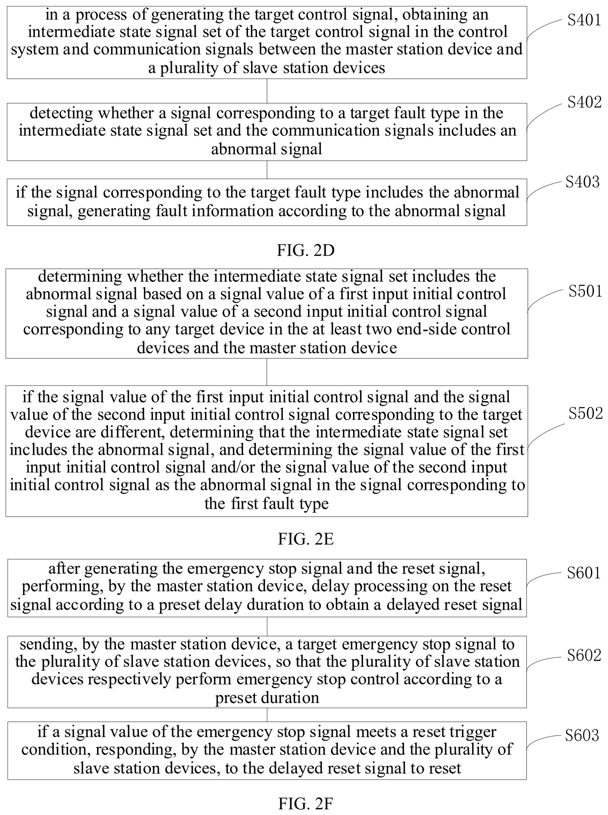

In some embodiments, FIG. 2D is a flowchart of a control method provided by an embodiment of the present disclosure. The control method may be used for the fault detection. As shown in FIG. 2D, the control method includes the following steps S401 - S403.

At step S401, in a process of generating the target control signal, an intermediate state signal set of the target control signal in the control system and communication signals between the master station device and a plurality of slave station devices are obtained.

The intermediate state signal set may include input signals and output signals of each of the at least two end-side control devices and the master station device.

In some embodiments, the fault detection may obtain the above-mentioned various signals through the modbusTCP interface.

In some embodiments, the input signal of the end-side control device may include: a first input initial control signal, a second input initial control signal, etc. The output signal of the end-side control device may include: a first output initial control signal, a second output initial control signal.

For example, according to the signal transmission direction, if the i-th end-side control device is the end-side control device firstly receiving a user trigger among the N end-side control devices, the first input initial control signal of the i-th end-side control device may include: the first initial control signal generated by the user of the i-th end-side control device through button triggering. If the i-th end-side control device is the end-side control device after the end-side control device firstly receiving the user trigger among the N end-side control devices, and the i-th end-side control device has been triggered, the first input initial control signal of the i-th end-side control device may include: the first output initial control signal of the (i-1)-th end-side control device, and the first initial control signal generated by the user of the i-th end-side control device through button triggering. If the i-th end-side control device is the end-side control device after the end-side control device firstly receiving the user trigger among the N end-side control devices, and the i-th end-side control device has not been triggered, the first input initial control signal of the i-th end-side control device may include: the first output initial control signal of the (i-1)-th end-side control device.

It should be noted that the second input initial control signal of the end-side control device is a signal with the same nature as the first input initial control signal but a different transmission channel. Therefore, for different implementation methods of the end-side control device, the content of the second input initial control signal of the end-side control device is similar to the content of the above-mentioned first input initial control signal, which will not be repeated here.

In some embodiments, the input signal of the master station device may include: the first output initial control signal and the second output initial control signal of the end-side control device to which the master station device is connected, that is, the first output initial control signal and the second output initial control signal of the last end-side control device among the N end-side control devices. The output signal of the master station device may include: the target control signal outputted by the master station device to each slave station device. The communication signal between the master station device and each of the plurality of slave station devices may include: a communication status between the master station device and each slave station device.

It should be noted that the above description of the input signals and output signals of each device is illustrative, but do not limit the contents of the input signals and output signals of each device involved in the embodiments of the present disclosure. In some other embodiments, the input signal of the end-side control device may also include a reset input signal, a raster signal, and a sensor signal, and the output signal of the end-side control device may also include a reset output signal, etc., which will not be described in detail here.

At step S402, it is detected whether a signal corresponding to a target fault type in the intermediate state signal set and the communication signals includes an abnormal signal.

The target fault type belongs to a preset fault type set.

In order to facilitate the detection and location of a fault with relatively high frequency and to narrow the scope of fault detection and location, in the embodiments of the present disclosure, a fault type set may be pre-set, and each fault type in the fault type set may be a fault corresponding to a certain type of devices or a certain type of signals in the control system.

For example, the preset fault type set may include:
a first fault type which may indicate a transmission interface fault in the at least two end-side control devices; the second fault type which may indicate a communication connection fault between the master station device and the plurality of slave station devices; the third fault type which may indicate a control logic fault in any of the at least two end-side control devices.

It should be noted that the fault type set involved in the embodiments of the present disclosure may also include more fault types, which are not listed one by one here.

In some embodiments, the target fault type includes at least one of the first fault type, the second fault type, or the third fault type. Since the interface of the end-side control device and the communication connections between the master station device and the plurality of slave station devices may have relatively high failure rates, the target fault type includes the first fault type and the second fault type.

According to the above description of different fault types, it can be seen that detection signals corresponding to different fault types are not the same.

In some embodiments, if the target fault type includes the first fault type, detecting whether the signal corresponding to the target fault type in the intermediate signal set and the communication signals includes an abnormal signal may include: detecting whether the intermediate signal set includes an abnormal signal.

As shown in FIG. 2E, in some embodiments, detecting whether the intermediate state signal set includes an abnormal signal may include steps S501 and S502.

At step S501, it is determined whether the intermediate state signal set includes the abnormal signal based on a signal value of a first input initial control signal and a signal value of a second input initial control signal corresponding to any target device in the at least two end-side control devices and the master station device.

The target device may be any one of the at least two end-side control devices, or may be the master station device.

For example, the signal value of the first input initial control signal and the signal value of the second input initial control signal of any one of the N end-side control devices may be compared to determine whether the intermediate state signal set includes an abnormal signal. Further, the signal value of the first input initial control signal and the signal value of the second input initial control signal of the master station device may be compared to determine whether the intermediate state signal set includes an abnormal signal.

At step S502, if the signal value of the first input initial control signal and the signal value of the second input initial control signal corresponding to the target device are different, it is determined that the intermediate state signal set includes the abnormal signal, and the signal value of the first input initial control signal and/or the signal value of the second input initial control signal is determined as the abnormal signal in the signal corresponding to the first fault type.

For example, if the signal value of the first input initial control signal and the signal value of the second input initial control signal corresponding to the target device are different, the different signals indicate a fault of the first fault type, and the different signals may be considered as abnormal signals of the first fault type. If the signal value of the first input initial control signal and the signal value of the second input initial control signal corresponding to the target device are the same, it means that the target device does not have a fault of the first fault type.

In some embodiments, if the target fault type includes the second fault type, detecting whether the signal corresponding to the target fault type in the intermediate state signal set and the communication signals includes an abnormal signal may include: detecting whether the communication signals include an abnormal signal.

Detecting whether the communication signals include an abnormal signal may include: if a signal value of a communication signal between the master station device and a slave station device reaches a first preset threshold, determining that the communication signal includes an abnormal signal.

In some embodiments, detecting whether the communication signals include an abnormal signal may detect whether the communication signal between each slave station device in the plurality of slave station devices and the master station device is normal. The first preset threshold represents whether the communication signal between the master station device and the slave station device is normal. If the signal value of the communication signal between the master station device and any slave station device reaches the first preset threshold, it represents that the communication signal between the slave station device and the master station device is abnormal, that is, the communication connection between the slave station device and the master station device is disconnected, and there is an abnormality.

For example, if the first threshold preset threshold is 0, it is determined that the communication signal includes an abnormal signal when the signal value of the communication signal between the master station device and the slave station device is 0. If the signal value of the communication signal between the master station device and the slave station device is 1, it is determined that the communication signal does not include an abnormal signal.

In some embodiments, if the target fault type includes the third fault type, detecting whether the signal corresponding to the target fault type in the intermediate state signal set and the communication signals include an abnormal signal may include: detecting whether an input signal and an output signal of any end-side control device are abnormal.

For example, taking the control system as a PLC system as an example, the signal in the PLC system may be a logic signal, and the logic signal is represented by a logic high level signal (i.e., the signal value is 1) and a logic low level signal (i.e., the signal value is 0). In the embodiments of the present disclosure, a normal signal may be determined if a signal value of the initial control signal is 1, and an abnormal signal may be determined if the signal value of the initial control signal is 0. Or, a normal signal may be determined if the signal value of the reset signal is 0, and an abnormal signal may be determined if the signal value of the initial control signal is 1. Whether each signal is abnormal may be determined according to actual situations, which is not limited in the embodiments of the present disclosure.

At step S403, if the signal corresponding to the target fault type includes the abnormal signal, fault information is generated according to the abnormal signal.

The fault information includes descriptive information of the target fault type and a position of a fault in the control system.

In some embodiments, when the target fault type is the first fault type, the fault information corresponding to the first fault type is first fault information. Generating the fault information according to the abnormal signal includes: generating the first fault information according to the abnormal signal in the signal corresponding to the first fault type.

In some embodiments, the first fault information may include descriptive information of the first fault type and a position of a first fault.

For example, the first fault information may be generated according to the first input initial control signal and the second input initial control signal which are different. The descriptive information in the first fault information may be: interface disconnection; and the fault position in the first fault information may be: an input interface of the target device and an output interface of a previous-level device of the target device.

In some embodiments, the first fault information may be presented in a manner as shown in Table 1.

**Table 1**

| Detection object | Signal name | Signal value | Fault type description | Possible fault position |
|---|---|---|---|---|
| end-side control device x | system emergency stop input 1 | signal values are different | interface disconnection | output interface of a control signal of end-side control device x-1; input interface of a control signal of end-side control device x |
| end-side control | system emergency | | | |
| device x | stop input 2 | | | |
| master station device | first input initial control signal | signal values are different | interface disconnection | output interface of a control signal of an end-side control device connected to the master station device; |
| master station device | second input initial control signal | | | |
| | | | | input interface of a control signal of the master station device |

In some embodiments, when the target fault type is the second fault type, the fault information corresponding to the second fault type is second fault information. Generating the fault information according to the abnormal signal includes: generating the second fault information according to the abnormal signal in the signal corresponding to the second fault type.

In some embodiments, the second fault information may include: the number of slave station devices with abnormal communication signals and the identifications of the slave station devices with abnormal communication signals. The number of slave station devices with abnormal communication signals may be descriptive information of the second fault type, and the identification of the slave station device may indicate a position of a second fault.

In some embodiments, the second fault information may be presented in a manner as shown in Table 2.

**Table 2**

| | Signal name | Signal value | Signal value description | Reported abnormal information |
|---|---|---|---|---|
| master station device | communication connection signal of slave station device 1 | 1 | in a case where the communication connection is normal, the signal value is 1; in a case where the communication connection is disconnected, the signal value is 0 | reporting the number of slave station devices which are disconnected and identifications of the slave station devices |
| master station device | communication connection signal of slave station device 2 | 1 | | |
| master station device | communication connection signal of slave station device 3 | 0 | | |
| ... | ... | ... | | |
| master station device | communication connection signal of slave station device m | 1 | | |

In some embodiments, when the target fault type is the third fault type, for any one of the N end-side control devices, if there is no abnormality in the input signal of the end-side control device and the end-side control device has no output signal, it is determined that the signal corresponding to the target fault type includes an abnormal signal, that is, the end-side control device has a fault of the third fault type.

In some embodiments, the fault information of the third fault type may be presented in a manner as shown in Table 3.

**Table 3**

| Detection object | Signal name | Signal value | Fault type description | Possible fault position |
|---|---|---|---|---|
| | raster input signal | 1 | | |
| | sensor input signal | 1 | | |
| | fist button initial control signal | 1 | | |
| end-side control device y | second button initial control signal | 1 | the sensor signal cannot shield the raster signal | button box of end-side control device y, a wire of at least one of a raster or a sensor |
| | fist input initial control signal | 1 | | |
| | second input initial control signal | 1 | | |
| | fist output initial control signal | 0 | | |
| | second output initial control signal | 0 | | |

It should be noted that the above Tables 1 to 3 are exemplary presentations of fault information and do not constitute a limitation on the fault information involved in the embodiments of the present disclosure. For fault information of other fault types in the embodiments of the present disclosure, the presentation form and content may be flexibly set, which are not limited here.

In some embodiments, in order to facilitate fault analysis, if the signal corresponding to the target fault type includes an abnormal signal, the embodiments of the present disclosure may also include obtaining an error log in an operation log of the master station device.

In the embodiments of the present disclosure, each device in the control system may be used as an input and output node. By determining states of the input signal and the output signal of each device, it is determined whether the signal corresponding to the preset fault type includes an abnormal signal, so as to determine whether the control system has a fault of the corresponding type, and generate fault information including fault type descriptive information and a fault position. In this way, not only whether the control system has a corresponding fault can be detected according to a pre-configured fault type, but also a position where the fault occurs can be located during the detection process.

In some embodiments, FIG. 2F is a flowchart of a control method provided in an embodiment of the present disclosure. The control method may be used for the emergency stop and reset. As shown in FIG. 2F, the control method includes steps S601 to S603.

At step S601, after generating the emergency stop signal and the reset signal, the master station device performs delay processing on the reset signal according to a preset delay duration to obtain a delayed reset signal.

The output signal of the end-side control device includes the emergency stop signal and the reset signal. The preset delay duration is greater than or equal to 1 second (s).

For example, the master station device may delay the received reset signal for 1 second.

In some embodiments, the master station device may delay the received reset signal by using a first timer.

For example, the delay processing of the reset signal by means of the first timer may be triggered by a falling edge.

It can be understood that in a scenario where the reset signal and the emergency stop signal are generated almost simultaneously, the emergency stop control may be triggered to be executed first by delaying the reset signal and sending the emergency stop signal to the slave station device.

In some embodiments, the emergency stop signal and the reset signal may be generated by multiple end-side control devices and transmitted to the master station device. The first channel initial control signal in the initial control signal generated by the end-side control device includes a first channel emergency stop signal, and the second channel initial control signal in the initial control signal generated by the end-side control device includes a second channel emergency stop signal, that is, the emergency stop signal may include the first channel emergency stop signal and the second channel emergency stop signal.

For example, at least one of the multiple end-side control devices may generate a first initial emergency stop signal, a second initial emergency stop signal, and an initial reset signal in response to the user's trigger operation. The end-side control device that receives the trigger operation my transmit the first initial emergency stop signal, the second initial emergency stop signal, and the initial reset signal to the master station device through three channels in an order of series connection after generating the first initial emergency stop signal, the second initial emergency stop signal, and the initial reset signal. The first channel emergency stop signal includes the first initial emergency stop signal generated by at least one end-side control device; the second channel emergency stop signal includes the second initial emergency stop signal generated by at least one end-side control device; the reset signal includes the initial reset signal generated by at least one end-side control device.

In some embodiments, if at least two end-side control devices (hereinafter taking end-side control device 1 and end-side control device 2 as an example) respond to the user's trigger operation, the end-side control device 1 generates a first initial emergency stop signal 1, a second initial emergency stop signal 1 and an initial reset signal 1, and the end-side control device 2 generates a first initial emergency stop signal 2, a second initial emergency stop signal 2 and an initial reset signal 2, then the end-side control device 1 and the end-side control device 2 may transmit the generated signals in sequence according to the series relationship, so that the signals transmitted along respective channels in the end-side control device 1 and the end-side control device 2 are combined. That is, the first initial emergency stop signal 1 is combined with the first initial emergency stop signal 2 to obtain the first channel emergency stop signal; the second initial emergency stop signal 1 is combined with the second initial emergency stop signal 2 to obtain the second channel emergency stop signal; and the initial reset signal 1 is combined with the initial reset signal 2 to obtain the reset signal.

In some embodiments, the first channel emergency stop signal and the second channel emergency stop signal may be the same signal transmitted through two channels. Before performing the delay processing on the reset signal according to the preset delay duration, the master station device may verify the consistency of the first channel emergency stop signal and the second channel emergency stop signal, that is, performing the security verification on the first channel emergency stop signal and the second channel emergency stop signal to determine the correctness of the first channel emergency stop signal and the second channel emergency stop signal.

For example, the master station device may determine whether the signal values of the first channel emergency stop signal and the second channel emergency stop signal are the same, that is, determining whether the rising edges of the first channel emergency stop signal and the second channel emergency stop signal are the same, and/or determining whether the falling edges of the first channel emergency stop signal and the second channel emergency stop signal are the same. If the signal values of the first channel emergency stop signal and the second channel emergency stop signal are the same, it may be determined that the first channel emergency stop signal and the second channel emergency stop signal are consistent, that is, the first channel emergency stop signal and the second channel emergency stop signal have passed the security verification, and emergency stop control may be performed accordingly. Otherwise, it is considered that the first channel emergency stop signal and the second channel emergency stop signal have failed the security verification, that is, there are faults occurring to the first channel emergency stop signal and the second channel emergency stop signal during the transmission process, and there is a correctness risk of the first channel emergency stop signal and the second channel emergency stop signal, and emergency stop control cannot be performed in this case.

At step S602, the master station device sends a target emergency stop signal to the plurality of slave station devices, so that the plurality of slave station devices respectively perform emergency stop control according to a preset duration.

The target emergency stop signal is obtained according to the emergency stop signal, that is, the target control signal includes the target emergency stop signal.

For example, if the first channel emergency stop signal and the second channel emergency stop signal are consistent, that is, the first channel emergency stop signal and the second channel emergency stop signal have passed the security verification, the master station device may send the first channel emergency stop signal or the second channel emergency stop signal that has passed the security verification as the target emergency stop signal to the plurality of slave station devices.

In some embodiments, since it takes a certain buffer delay for the slave station device to respond to the target emergency stop signal, and it also takes a certain execution time for the robot to enter an emergency stop state from receiving an emergency stop instruction from the slave station device, for any slave station device among the plurality of slave station devices, the slave station device controls the target emergency stop signal to be effectively executed for a time period that reaches the preset duration, and the preset duration is a sum of a duration of the emergency stop buffer delay and a duration for the robot corresponding to the slave station device to enter the emergency stop state.

In some embodiments, the emergency stop control is triggered by a high level and maintained by a low level. Therefore, the slave station device may effectively execute the target emergency stop signal by controlling the target emergency stop signal to maintain at a low level state. In order to maintain the safety of the emergency stop control and the robot during a time period of performing an emergency stop behavior, the master station device does not respond to triggering of any control signal within the preset duration, and after the preset duration, the master station device may resume responding to and processing the received signal.

For example, if the buffer delay of the slave station device for the target emergency stop signal is 7s, and the time required for the robot corresponding to the slave station device to enter the emergency stop state is 2s, then after the target emergency stop signal is sent, any slave station device among the plurality of slave station devices may control the target emergency stop signal to maintain at the low level state for 9s, so that the emergency stop triggered by the target emergency stop signal before the reset can be effectively executed.

For example, at 10:00, the master station device receives a set of a first channel emergency stop signal, a second channel emergency stop signal and a reset signal. The master station device delays the reset signal by 1 second at 10:00, and transmits the first channel emergency stop signal and second channel emergency stop signal after the security verification as the target emergency stop signal to the slave station device if the security verification is passed. The slave station device responds to the target emergency stop signal at 10:00 to perform emergency stop control on the robot, and at the time of starting the emergency stop control (such as 10:00), the target emergency stop signal is kept at a low level for 9 seconds. In this case, if the master station device receives a set of a first channel emergency stop signal, a second channel emergency stop signal and a reset signal again at 10:05, since the slave station device is responding to the target emergency stop signal at 10:00 to perform emergency stop control on the robot and needs to control the target emergency stop signal to maintain at the low level state until 10:09, in order to ensure the effective execution of the target emergency stop signal, the master station device does not respond to the signal at 10:05. If at 10:11, the master station device receives a set of a first channel emergency stop signal, a second channel emergency stop signal and a reset signal again, at this time, the slave station device has controlled the target emergency stop signal to maintain at the low level state for the preset duration and the target emergency stop signal is effectively executed, thus the master station device may respond to the signal at 10:11 and process it according to the processing logic in the embodiments of the present disclosure.

In some embodiments, the slave station device may maintain the target emergency stop signal at the low level through a second timer.

For example, the maintenance of the low level of the target emergency stop signal by means of the second timer may be triggered by a falling edge.

At step S603, if a signal value of the emergency stop signal meets a reset trigger condition, the master station device and the plurality of slave station devices respond to the delayed reset signal to reset.

The condition for triggering the reset signal to be sent may be that the emergency stop signal is a high level signal, and when the emergency stop signal is a low level signal, the reset signal has no effect.

In some embodiments, since the emergency stop signal includes the first channel emergency stop signal and the second channel emergency stop signal, when the first channel emergency stop signal and the second channel emergency stop signal are both high level signals, it may be considered that the signal value of the emergency stop signal meets the reset trigger condition.

For example, when it is detected that the first channel emergency stop signal and the second channel emergency stop signal are both high level signals, an emergency stop (Estop) module corresponding to the master station device receives the delayed reset signal, and the master station device sends the delayed reset signal to the emergency stop (Estop O1) module corresponding to the slave station device to trigger the Estop module and the Estop O1 module to reset.

It can be understood that in the embodiments of the present disclosure, in the scenario where the reset signal and the emergency stop signal are generated almost at the same time, delay processing may be performed on the reset signal and the emergency stop signal may be sent to the slave station device to generate a certain time interval between the emergency stop control and the reset, so that an emergency stop operation may be controlled to be executed first, and then the related device may be controlled to reset. The sending of the reset signal is controlled by the emergency stop signal. Therefore, for the reset signal after the delay processing, if the emergency stop signal meets the reset trigger condition, the master station device and the plurality of slave station devices may respond to the delayed reset signal to reset. In this way, after executing the emergency stop control, the related functional devices in the control system may release an emergency stop state by resetting to support the next emergency stop control. That is, when the emergency stop signal and the reset signal are generated almost at the same time, by performing the delay processing on the reset signal, the control system can be reliably reset while maintaining the effect of emergency stop control, thereby optimizing the safety performance.

The embodiments of the present disclosure are introduced below with reference to examples.

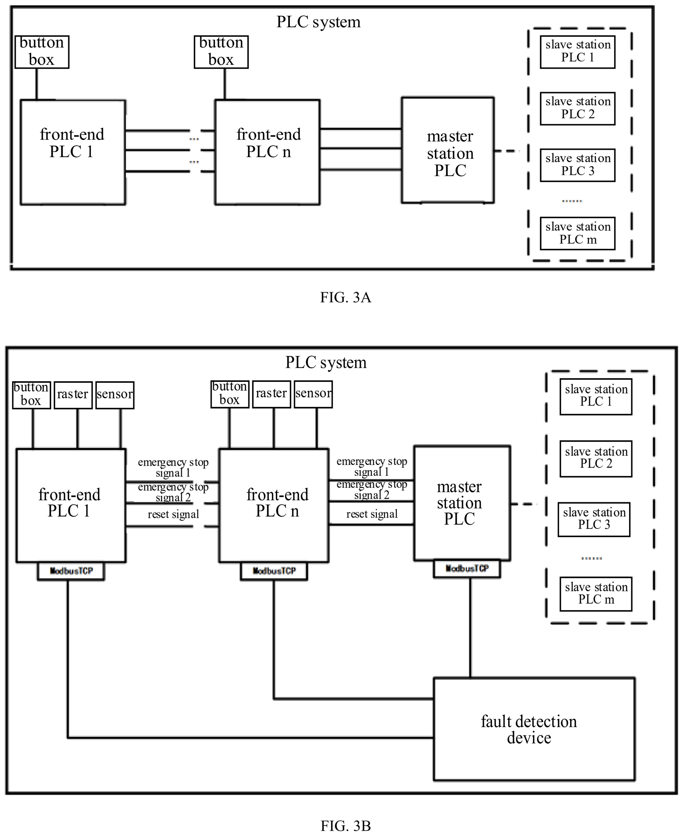

In some embodiments, the control system in the above embodiments may be referred to as a PLC system, based on a programmable logic controller (PLC) system. Taking the implementation of the PLC system as an example, FIG. 3A is a schematic diagram of a PLC system provided according to an embodiment of the present disclosure. The PLC system may include n front-end PLCs, a master station PLC, and m slave station PLCs deployed on the robot side. m and n are integers greater than or equal to 2. The front-end PLC may be an implementation of the end-side control device in FIG. 1, the master station PLC may be an implementation of the security verification device in FIG. 1, and the slave station PLC may be an implementation of the slave station device in FIG. 1. The front-end PLC may be referred to as an end-side control device or a front-end device or a signal generating device or an emergency stop signal generating device, the master station PLC may be referred to as a master station device or a master control device, and the slave station PLC may be referred to as a slave station device or a robot control device or a controlled device.

For example, regarding a connection relationship between n front-end PLCs and the master station PLC, a connection relationship between the master station PLC and multiple slave station PLCs, and functions of n front-end PLCs, the master station PLC and the multiple slave station PLCs, reference may be made to the description of the implementations illustrated in FIG. 1, which will not be described in detail here.

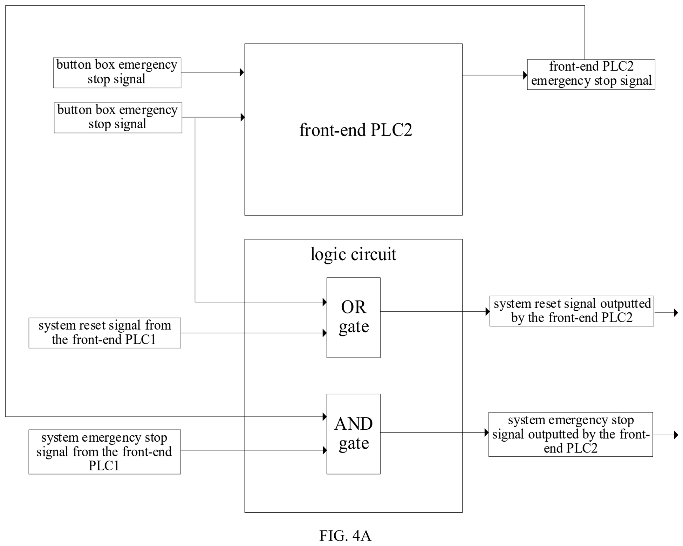

In FIG. 3A, the n front-end PLCs may be connected in series using a logic circuit, and the n-th front-end PLC among the n front-end PLCs is connected to the master station PLC using a logic circuit (as shown in FIG. 4A). The master station PLC is wirelessly connected to the m slave station PLCs, for example, via Ethernet. The m slave station PLCs control operations of robots respectively.

In some embodiments, the control signal includes an emergency stop signal, which may be generated by a user's trigger operation, and the emergency stop signal may control the robot to enter an emergency stop state. In the following embodiments, the control signal being an emergency stop signal is taken as an example for illustrative description.

As shown in FIG. 3A, each of the n front-end PLCs includes a button box, which may generate a button box emergency stop signal (i.e., the second initial control signal in the above embodiments) and a button box reset signal (i.e., the second reset signal in the above embodiments) in response to a user's trigger operation. Since each front-end PLC transmits the button box emergency stop signal through two signal channels, the button box emergency stop signal includes a button box emergency stop signal 1 (i.e., the first channel initial emergency stop signal in the above embodiments) and a button box emergency stop signal 2 (i.e., the second channel initial emergency stop signal in the above embodiments).

For example, taking the front-end PLC1 responding to the user's trigger as an example, after generating the button box emergency stop signal and the button box reset signal, the front-end PLC1 outputs the button box emergency stop signal and the button box reset signal to the front-end PLC2. In this scenario, for the front-end PLC2, the button box emergency stop signal of the front-end PLC1 is a system emergency stop signal (i.e., the first initial control signal in the above embodiments), and the button box reset signal of the front-end PLC1 is a system reset signal (i.e., the first initial reset signal in the above embodiments).

In some embodiments, if the button box of the front-end PLC2 does not receive the user's trigger operation, the front-end PLC2 may take the inputted system emergency stop signal and the inputted system reset signal as output signals and output them to the front-end PLC3.

In other embodiments, if the button box of the front-end PLC2 receives the user's trigger operation, the front-end PLC2 generates a button box emergency stop signal and a button box reset signal. Afterwards, the button box emergency stop signal of the front-end PLC2 and the system emergency stop signal inputted by the front-end PLC1 to the front-end PLC2 are both inputted to the logic circuit for processing to obtain a system emergency stop signal outputted by the front-end PLC2. The button box reset signal of the front-end PLC2 and the system reset signal inputted by the front-end PLC1 to the front-end PLC2 are both inputted to the logic circuit for processing to obtain a system reset signal outputted by the front-end PLC2. The system emergency stop signal and the system reset signal outputted by the front-end PLC2 are outputted to the front-end PLC3.

Regarding the operations and output signals of the front-end PLC3 to front-end PLCn, reference may be made to the front-end PLC2, which will not be described in detail here.

In the scenario where the front-end PLCn outputs the initial emergency stop signal and the initial reset signal to the master station PLC, the master station PLC receives the first channel initial emergency stop signal and the second channel initial emergency stop signal outputted by the front-end PLCn through two transmission channels. In an actual implementation scenario, the first channel initial emergency stop signal and the second channel initial emergency stop signal are signals with the same content transmitted on the two channels, i.e., the first channel initial emergency stop signal and the second channel initial emergency stop signal should be the same. The master station PLC may compare whether a rising edge of the first channel initial emergency stop signal and a rising edge of the second channel initial emergency stop signal are the same, or whether a falling edge of the first channel initial emergency stop signal and a falling edge of the second channel initial emergency stop signal are the same. If they are the same, it means that the first channel initial emergency stop signal and the second channel initial emergency stop signal are the same, and the security verification is passed; otherwise, it means that the first channel initial emergency stop signal and the second channel initial emergency stop signal are different, and the security verification fails.

After the security verification is passed, the master station PLC uses the first channel initial emergency stop signal or the second channel initial emergency stop signal that has passed the security verification as a target emergency stop signal, and may send the target emergency stop signal to the m slave station PLCs respectively based on the CIPsafety protocol via Ethernet. Each slave station PLC responds to the emergency stop signal to enable the robot corresponding to the slave station PLC stops emergently.

FIG. 3B is a schematic diagram of a PLC system according to an embodiment of the present disclosure. As shown in FIG. 3B, each of the n front-end PLCs includes a raster and a sensor. Since each of the n front-end PLCs in the PLC system transmits the initial control signal through dual channels, the raster is configured to generate a raster signal 1 and a raster signal 2 in response to the user's trigger operation, and the sensor is configured to generate a sensor signal 1 and a sensor signal 2 in response to the user's trigger operation. A fault detection device may collect an intermediate state signal between the n front-end PLCs and the master station PLC through the modbusTCP interface.

In some embodiments, FIG. 4A is a schematic diagram of a logic circuit in a PLC system according to an embodiment of the present disclosure. As shown in FIG. 4A, the logic circuit includes an AND gate circuit and an OR gate circuit. Taking the above second implementation scenario of the front-end PLC2 as an example, the system emergency stop signal from the front-end PLC1 is inputted to the AND gate circuit of the logic circuit, and the system emergency stop signal from the front-end PLC1 is inputted to the OR gate circuit.

In some embodiments, after the front-end PLC2 generates the button box emergency stop signal and the button box reset signal, the front-end PLC2 outputs the button box emergency stop signal as the front-end PLC2 emergency stop signal to an input port of the AND gate circuit, and an AND operation is performed on the system emergency stop signal from the front-end PLC1 and the front-end PLC2 emergency stop signal via the AND gate circuit to obtain the system emergency stop signal outputted by the front-end PLC2. The front-end PLC2 outputs the button box reset signal to an input port of the OR gate circuit, and an OR operation is performed on the system reset signal from the front-end PLC1 and the button box reset signal via the OR gate circuit to obtain the system reset signal outputted by the front-end PLC2.

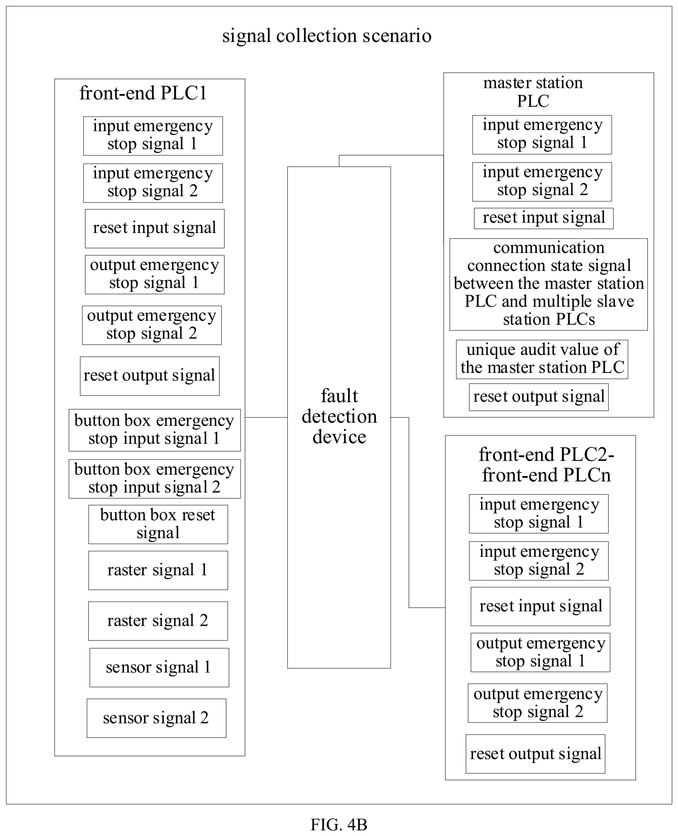

FIG. 4B is a schematic diagram of a signal collection scenario according to an embodiment of the present disclosure, as shown in FIG. 4B. For any of the n front-end PLCs in FIG. 3B, the fault detection device may collect the input emergency stop signal 1, the input emergency stop signal 2, the reset input signal, the output emergency stop signal 1, the output emergency stop signal 2, and the reset output signal of the front-end PLC. If the front-end PLC responds to the user's trigger operation, the fault detection device may also collect the button emergency stop input signal 1, the button emergency stop input signal 2, the button reset input signal, the raster signal 1, the raster signal 2, the sensor signal 1, and the sensor signal 2 of the front-end PLC. The button box emergency stop signal includes the button box emergency stop input signal 1 and the button box emergency stop input signal 2.

For the master station PLC, the fault detection device may collect the input emergency stop signal 1 (also called the first input initial control signal), the input emergency stop signal 2 (also called the second input initial control signal), the reset input signal of the master station PLC, communication connection state signals between the master station PLC and the multiple slave station PLCs, the reset output signal, and a unique audit value of the master station PLC.

For example, the signals collected by the fault detection device may include part or all of those in Table 4.

**Table 4**

| No. | Signal name | | Description | Position of the PLC system |
|---|---|---|---|---|
| 1 | input emergency stop signal 1 | emergency stop signal 1 of the previous-level PLC inputted according to a series relationship | | front-end PLC |
| 2 | input emergency stop signal 2 | emergency stop signal 2 of the previous-level PLC inputted according to a series relationship | | |
| 3 | reset input signal | reset signal of the previous-level PLC inputted according to a series relationship | | |
| 4 | button box emergency stop input signal 1 | | button box emergency stop signal 1 | |
| 5 | button box emergency stop input signal 2 | | button box emergency stop signal 2 | |
| 6 | button box reset input signal | | button box reset | |
| 7 | output emergency stop signal 1 | emergency stop signal 1 outputted to the next-level PLC according to a series relationship | | |
| 8 | output emergency stop signal 2 | emergency stop signal 2 outputted to the next-level PLC according to a series relationship | | |
| 9 | reset output signal | reset signal outputted to the next-level PLC according to a series relationship | | |
| 10 | raster signal 1 | | raster ossd1 | |
| 11 | raster signal 2 | | raster ossd2 | |
| 12 | sensor signal 1 | | sensor input 1 | |
| 13 | sensor signal 2 | | sensor input 2 | |
| 14 | communication connection state | communication connection signal between the master station PLC and the slave station PLC | | security PLC master station |
| 15 | input emergency stop signal 1 | emergency stop signal 1 inputted by the front-end PLC series connection to the master station PLC | | |
| 16 | input emergency stop signal 2 | emergency stop signal 2 inputted by the front-end PLC series connection to the master station PLC | | |
| 17 | reset input signal | reset signal inputted by the front-end PLC series connection to the master station PLC | | |
| 18 | output emergency stop signal | emergency stop output signal sent to the slave station PLC | | |
| 19 | reset output signal | reset output (EIP) sent to the slave station | | |
| 20 | primary error log | primary error log register of the master station PLC | | |
| 21 | secondary error log | secondary error log register of the master station PLC | | |
| 22 | unique audit value | unique audit value of ladder logic Program | | |

For example, each of the various emergency stop signals in Table 4 has a high level in a normal state, that is, the signal value is 1, indicating that it has a function of triggering the emergency stop state; has a low level in an abnormal state, that is, the signal value is 0, indicating that it does not have the function of triggering the emergency stop state. Each of various reset signals has a low level in a normal state, that is, the signal value is 0, indicating that the reset is not pressed; has a high level in an abnormal state, that is, the signal value is 1, indicating that the reset is pressed. Each of the raster signal and the sensor signal has a high level in a normal state, that is, the signal value is 1, indicating that it is not triggered or has not entered a shielding state; has a low level when being triggered, that is, the signal value is 0, indicating that it is triggered or enters the shielding state. The communication connection state may be determined by a monitoring variable of a security connection between the master station PLC and the slave station PLC, and the master station PLC may read the variable in real time. The unique audit value of the master station PLC is configured to identify whether the program in the master station PLC has been accessed.

In some embodiments, the fault detection device may detect whether the signals of the first fault type and the third fault type are abnormal based on the signals in Table 4, and obtain the fault information in Tables 5 and 6.

**Table 5**

| | Position | Signal name | Signal value | Possible fault type | Possible fault position |
|---|---|---|---|---|---|
| 1 | front-end PLC n-1 | output emergency stop signal 1 | 1 | wire breakage | transmission channels between PLC n-1 to PLC n and the wire of an input port of PLC n |
| | front-end PLC n-1 | output emergency stop signal 2 | 1 | | |
| | front-end PLC n | input emergency stop signal 1 | different values | | |
| | front-end PLC n | input emergency stop signal 2 | | | |
| 2 | front-end PLC n | output emergency stop signal 1 | 1 | wire breakage | transmission channel between PLC n and the master station PLC and the wire of an input port of the master station PLC |
| | front-end PLC n | output emergency stop signal 2 | 1 | | |
| | master station PLC | input emergency stop signal 1 | different values | | |
| | master station PLC | input emergency stop signal 2 | | | |

**Table 6**

| | Position | Signal name | Signal value | Possible fault type | Possible fault position |
|---|---|---|---|---|---|
| 1 | front-end PLCn | raster signal 1 | 1 | the sensor cannot shield raster triggering | the PLC n logic and the wire of at least one of the button |
| | front-end | raster signal 2 | 1 | | |
| | PLCn | | | | box, the raster, or the sensor |
| | front-end PLCn | sensor signal 1 | 1 | | |
| | front-end PLCn | sensor signal 2 | 1 | | |
| | front-end PLCn | button box emergency stop input signal 1 | 1 | | |
| | front-end PLCn | button box emergency stop input signal 2 | 1 | | |
| | front-end PLCn | input emergency stop signal 1 | 1 | | |
| | front-end PLCn | input emergency stop signal 2 | 1 | | |
| | front-end PLCn | output emergency stop signal 1 | 0 | | |
| | front-end PLCn | output emergency stop signal 2 | 0 | | |

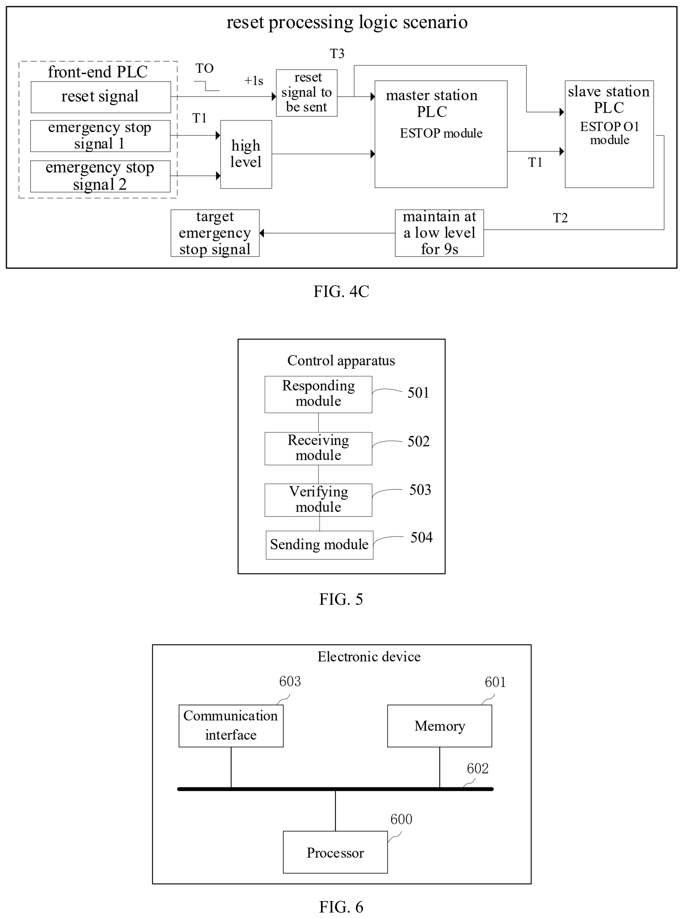

In some embodiments, based on FIG. 3A or FIG. 3B, FIG. 4C shows a schematic diagram of a reset processing logic scenario according to an embodiment of the present disclosure. With reference to FIG. 4C, the master station PLC receives a reset signal, a first channel initial emergency stop signal, and a second channel initial emergency stop signal at time T0. After verifying that the first channel initial emergency stop signal and the second channel initial emergency stop signal have passed security verification, the master station PLC, for example, delays the reset signal by 1 second to obtain a reset signal to be sent. At time T1, the Estop module in the master station PLC sends the first channel initial emergency stop signal or the second channel initial emergency stop signal that have passed the security verification as the target emergency stop signal to m slave station PLCs in an Ethernet manner based on the CIPsafety protocol. The master station PLC may also detect signal values of the first channel initial emergency stop signal and the second channel initial emergency stop signal received after time T1 from time T1. Time T1 is after time T0+1s.

For any of the m slave station PLCs, the Estop O1 module in the slave station PLC may send the target emergency stop signal to the corresponding robot at time T2, and enable the target emergency stop signal to maintain at a low level for 9 seconds from time T2, so that the corresponding robot may stably enter the emergency stop state. Time T2 is later than time T1.

In some embodiments, during the time period of T2+9s, the Estop module in the master station PLC and the Estop O1 module in the slave station PLC do not respond to the input emergency stop signal and the reset signal, and do not process them. If at T3 after T2+9s, the master station PLC receives a set of a first channel initial emergency stop signal and a second channel initial emergency stop signal again, and detects that the first channel initial emergency stop signal and the second channel initial emergency stop signal are both high-level signals, the reset signal to be sent may be sent to the Estop module and the Estop O1 modules of the m slave station PLCs, and the Estop module and each Estop O1 module may respond to the reset signal to be sent to perform the reset operation, and the reset operation refers to release the state of executing the emergency stop.

In summary, in the control system provided by the embodiments of the present disclosure, the N end-side control devices are connected to each other in series, and the N-th end-side control device is connected to the security verification device. The one or more initial control signals generated by any one or more end-side control devices among the N end-side control devices may be transmitted to the end-side control devices one by one based on the series relationship, and finally transmitted to the security verification device for security verification. In this way, for the N end-side control devices deployed at different locations in the warehouse environment, there is no need to deploy security verification devices in one-to-one correspondence with the N end-side control devices, so that while maintaining the complexity of the control system, one security verification device is deployed to achieve the security verification of the initial control signal generated by any end-side control device, and the cost will not be increased. In the embodiments of the present disclosure, each device in the control system may be used as an input and output node to obtain states of the input signal and the output signal of each device, and by detecting whether the signal corresponding to the preset fault type includes an abnormal signal, it is detected whether the control system has a fault of a corresponding type, and the fault information containing the fault type descriptive information and the fault position is generated. In this way, not only whether the control system has a corresponding fault can be detected according to a pre-configured fault type, but also a position where the fault occurs can be located during the detection process. In the scenario where the reset signal and the emergency stop signal are generated almost simultaneously, the reset signal may be delayed and the emergency stop signal may be sent to the slave station device to generate a certain time interval between the emergency stop control and the reset, so that the emergency stop operation may be controlled to be executed first, and then the related device may be controlled to reset to support the next emergency stop control. The sending of the reset signal is controlled by the emergency stop signal. Accordingly, for the reset signal after the delay processing, if the emergency stop signal meets the reset trigger condition, the master station device and multiple slave station devices respond to the delayed reset signal to reset. In this way, after the emergency stop control is executed, the related functional devices in the emergency stop control system may release the emergency stop state by resetting. It can be seen that in the embodiments of the present disclosure, when the emergency stop signal and the reset signal are generated almost simultaneously, the reset signal may be delayed, so that the control system can be reliably reset while maintaining the effect of emergency stop control.

The following describes an apparatus embodiment corresponding to the aforementioned method embodiment.

The embodiments of the present disclosure also provide a control apparatus, which may be applied to the system shown in FIG. 1 or FIG. 3A or FIG. 3B to execute the control method in any of the above method embodiments. As shown in FIG. 5, the apparatus includes: a responding module 501, a receiving module 502, a verifying module 503 and a sending module 504. The responding module 501 is configured to, in response to a trigger operation from a user, transmit an output signal of a first end-side control device among the at least two end-side control devices sequentially via at least one second end-side control device, in which the output signal includes an initial control signal, the first end-side control device is an end-side control device firstly triggered among the at least two end-side control devices, or an end-side control device located after an end-side control device firstly triggered; the at least one second end-side control device includes an end-side control device located after the first end-side control device among the at least two end-side control devices. The receiving module 502 is configured to receive an output signal of a last end-side control device among the at least two end-side control devices. The verifying module 503 is configured to, in a case where an output signal of a last end-side control device among the at least two end-side control devices is received, perform security verification on an initial control signal in the output signal of the last end-side control device. The sending module 504 is configured to, in a case where the security verification is passed, send a target control signal to each of the plurality of slave station devices according to the initial control signal, so that the plurality of slave station devices control respective robots according to the target control signal respectively.

In some embodiments, the sending module 504 is also configured to transmit a first initial control signal and a first reset signal to a next second end-side control device adjacent to the first end-side control device; in which the first initial control signal refers to an initial control signal from another device, and the first reset signal refers to a reset signal from the other device, the other device includes a device in a previous signal transmission phase of the first end-side control device, and the input device is any one of the at least two end-side control devices. In some embodiments, the control apparatus provided by the embodiments of the present disclosure also includes an operation module. The operation module is configured to perform an AND operation on the first initial control signal and a second initial control signal to obtain the initial control signal to be output after the AND operation, in which the second initial control signal refers to an initial control signal generated by the first end-side control device in response to the trigger operation; further configured to perform an OR operation on the first reset signal and a second reset signal to obtain a reset signal to be output after the OR operation, in which the second reset signal refers to a reset signal generated by the first end-side control device in response to the trigger operation. The sending module 504 is also configured to transmit the initial control signal to be output and the reset signal to be output to the next second end-side control device adjacent to the first end-side control device, in which the output signal includes the initial control signal to be output and the reset signal to be output.

In some embodiments, the output signal of the at least two end-side control devices includes a first output initial control signal and a second output initial control signal. The verifying module 503 is further configured to compare whether a signal value of the first output initial control signal is the same as a signal value of the second output initial control signal; and in a case where the signal value of the first output initial control signal is the same as the signal value of the second output initial control signal, determine that the security verification is passed.

In some embodiments, the control apparatus provided by the embodiments of the present disclosure further includes an obtaining module, a detecting module and a generating module.

The obtaining module is configured to, in a process of generating the target control signal, obtain an intermediate state signal set of the target control signal in the control system and communication signals between the master station device and the plurality of slave station devices, in which the intermediate state signal set includes input signals and output signals of each end-side control device of the at least two end-side control devices and the master station device. The detecting module is configured to detect whether a signal corresponding to a target fault type in the intermediate state signal set and the communication signals includes an abnormal signal, in which the target fault type belongs to a preset fault type set. The generating module is configured to, in a case where the signal corresponding to the target fault type includes the abnormal signal, generate fault information according to the abnormal signal, in which the fault information includes descriptive information of the target fault type and a position of a fault in the control system.

In some embodiments, the preset fault type set includes: a first fault type, indicating a transmission interface fault existing in the at least two end-side control devices; a second fault type, indicating a communication connection fault between the master station device and the plurality of slave station devices; and a third fault type, indicating a control logic fault of any one of the at least two end-side control devices.

In some embodiments, in a case where the target fault type includes the first fault type, the detecting module is configured to detect whether the intermediate state signal set includes the abnormal signal, in which an input signal of each end-side control device in the intermediate state signal set includes a first input initial control signal and a second input initial control signal. The detecting module is further configured to determine whether the intermediate state signal set includes the abnormal signal based on a signal value of a first input initial control signal and a signal value of a second input initial control signal corresponding to a target device among the at least two end-side control devices and the master station device; in a case where the signal value of the first input initial control signal and the signal value of the second input initial control signal corresponding to the target device are different, determine that the intermediate state signal set includes the abnormal signal, and determine the signal value of the first input initial control signal and/or the second input initial control signal as an abnormal signal in a signal corresponding to the first fault type.

In some embodiments, the generating module is further configured to generate first fault information according to the abnormal signal in the signal corresponding to the first fault type, in which the first fault information includes descriptive information of the first fault type and a first fault position; in which the descriptive information of the first fault type is that an interface is disconnected, and the first fault position includes an input interface of the target device and an output interface of a pervious-level device of the target device.

In some embodiments, in a case where the target fault type comprises the second fault type, the second fault type corresponding to second fault information, and the second fault information includes the number of slave station devices with abnormal communication signals and identifications of the slave station devices with abnormal communication signals.

In combination with the first aspect, in some embodiments, in a case where the target fault type includes the second fault type, the detecting module is configured to detect whether the communication signals include the abnormal signal; and in a case where a signal value of a communication signal between the master station device and a slave station device reaches a first preset threshold, determine that the communication signals include the abnormal signal.

In some embodiments, the generating module is further configured to generate second fault information according to an abnormal signal in a signal corresponding to the second fault type, in which the second fault information includes the number of slave station devices with abnormal communication signals and identifications of the slave station devices with abnormal communication signals.

In some embodiments, in a case where the target fault type includes the third fault type, in a case where there is no abnormality in the input signals of the at least two end-side control devices and the at least two end-side control devices have no output signal, determining that the signal corresponding to the target fault type includes the abnormal signal.

In some embodiments, the target fault type includes the first fault type and the second fault type.

In some embodiments, the control apparatus provided by the embodiments of the present disclosure further includes a delaying module and a resetting module.

The delaying module is configured to, after an emergency stop signal and a reset signal are generated, perform, by the master station device, delay processing on the reset signal according to a preset delay duration to obtain a delayed reset signal, in which the output signal includes the emergency stop signal and the reset signal. The sending module is configured to send a target emergency stop signal to the plurality of slave station devices, so that the plurality of slave station devices respectively perform emergency stop control according to a preset duration, in which the target emergency stop signal is obtained according to the emergency stop signal, and the target control signal includes the target emergency stop signal. The resetting module is configured to, in a case where a signal value of the emergency stop signal meets a reset trigger condition, respond, by the master station device and the plurality of slave station devices, to the delayed reset signal to reset.

In some embodiments, the preset delay duration is greater than or equal to 1 second.

In some embodiments, the control apparatus further includes an emergency stop control module applied in any slave station device, configured to control the target emergency stop signal to be effectively executed for a time period reaching the preset duration, in which the preset duration is a sum of a duration of an emergency stop buffer delay and a duration during which a robot corresponding to the slave station device enters an emergency stop state.

In some embodiments, the emergency stop control module is further configured to control the target emergency stop signal to be maintained at a low level state for the preset duration, so that the target emergency stop signal is effectively executed.

In some embodiments, the emergency stop signal includes a first channel emergency stop signal and a second channel emergency stop signal; a signal value of the emergency stop signal meeting a reset trigger condition includes: both the first channel emergency stop signal and the second channel emergency stop signal being high level signals.

In some embodiments, the control apparatus further includes a signal generating module applied in multiple end-side control devices connected in series, configured to: in response to the trigger operation from the user, obtain a first initial emergency stop signal, a second initial emergency stop signal, and an initial reset signal. The at least one end-side control device transmits the first initial emergency stop signal, the second initial emergency stop signal and the initial reset signal to the master station device through three channels in an order of series connection, in which the end-side control device includes an end-side control device, the first channel emergency stop signal includes the first initial emergency stop signal generated by the at least one end-side control device, the second channel emergency stop signal includes the second initial emergency stop signal generated by the at least one end-side control device, and the reset signal includes the initial reset signal generated by the at least one end-side control device.

In some embodiments, the control apparatus further includes a determining module, configured to determine that a signal value of the first channel emergency stop signal and a signal value of the second channel emergency stop signal are the same.

An electronic device embodiment corresponding to the aforementioned method embodiment is introduced below.

The embodiments of the present disclosure also provide an electronic device, which may be implemented as the system shown in FIG. 1 or FIG. 3A or FIG. 3B. In some other embodiments, the electronic device may also integrate different functions of the system shown in FIG. 1 or FIG. 3A or FIG. 3B into different hardware entities. For example, the verification function of the security verification device may be integrated into the processor for implementation, the signal transmission function between the end-side control devices may be integrated into the bus for implementation, and the signal transmission between the security verification device and M slave station devices may be integrated into the communication interface for implementation.

As shown in FIG. 6, it is a schematic diagram of an electronic device according to an embodiment of the present disclosure, which includes: a processor 600, a memory 601, a bus 602 and a communication interface 603. The processor 600, the communication interface 603 and the memory 601 are connected via the bus 602; the memory 601 stores a computer program that can be run on the processor 600, and the processor 600 executes the AMR control method provided by any of the aforementioned embodiments of the present disclosure when running the computer program.

The memory 601 may include a high-speed random access memory (RAM), and may also include a non-volatile memory, such as at least one disk memory. The communication connection between a system network element and at least one other network element is realized through at least one communication interface 603 (which may be wired or wireless), and the Internet, wide area network, local area network, metropolitan area network, etc. may be used.

The bus 602 may be an ISA bus, a PCI bus, or an EISA bus, etc. The bus may be classified into an address bus, a data bus, a control bus, etc. The memory 601 stores a program, and the processor 600 executes the program after receiving an execution instruction. The AMR control method disclosed in any implementation of the aforementioned embodiments of the present disclosure may be applied to the processor 600, or implemented by the processor 600.

The processor 600 may be an integrated circuit chip with signal processing capabilities. In the implementation, each step of the above method may be completed by a hardware integrated logic circuit in the processor 600 or the instruction in the form of software. The above processor 600 may be a general-purpose processor, including a central processing unit (CPU), a network processor (NP), etc.; may also be a digital signal processor (DSP), an application-specific integrated circuit (ASIC), a field-programmable gate array (FPGA) or other programmable logic devices, discrete gates or transistor logic devices, discrete hardware components. The methods, steps and logic block diagrams disclosed in the embodiments of the present disclosure may be implemented or executed. The general-purpose processor may be a microprocessor or the processor may also be any conventional processor. The steps of the methods disclosed in conjunction with the embodiments of the present disclosure may be directly embodied as executing by a hardware decoding processor, or by a combination of hardware and software modules in the decoding processor. The software module may be located in a mature storage medium in the art such as a random access memory, a flash memory, a read-only memory, a programmable read-only memory or an electrically erasable programmable memory, a register, etc. The storage medium is located in the memory 601, and the processor 600 reads the information in the memory 601 and completes the steps of the above methods in combination with its hardware.

The electronic device provided by the embodiment of the present disclosure is based on the same inventive concept as the AMR control method provided by the embodiment of the present disclosure, and has the same beneficial effect as the methods adopted, run or implemented by itself.

The embodiments of the present disclosure also provide a computer-readable storage medium corresponding to the AMR control method provided in the aforementioned embodiments. The computer-readable storage medium may be, for example, a CD on which a computer program (i.e., a program product) is stored. When the computer program is running on a processor, the AMR control method provided in any of the aforementioned embodiments is implemented.

It should be noted that examples of the computer-readable storage medium may also include, but not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other optical or magnetic storage media, which are not listed here.

In addition, an embodiment of the present disclosure further provides a computer program product, which is configured to store computer-readable program instructions. When the instructions are executed by a processor, an AMR control method of any of the aforementioned embodiments may be implemented.

It should be noted that, in the present disclosure, relational terms such as first and second, etc., are used only to distinguish one entity or operation from another entity or operation, and do not necessarily require or imply any such actual relationship or order between these entities or operations. Moreover, the terms "comprises", "comprising" or any other variants thereof are intended to cover non-exclusive inclusion, so that a process, method, article or device including a series of elements includes not only those elements, but also other elements not explicitly listed, or also includes elements inherent to such process, method, article or device. In the absence of further restrictions, the elements defined by the sentence "comprising a ..." do not exclude other identical elements in the process, method, article or device including the elements.

Each embodiment in the specification is described in a related manner. Regarding the same or similar parts between the embodiments, reference may be made to each other, and each embodiment focuses on the differences from other embodiments. In particular, for the apparatus embodiment, since it is basically similar to the method embodiment, the description is relatively simple, and the relevant parts may be referred to the partial description of the method embodiment.

The logic and/or steps illustrated in the flowchart or otherwise described herein, for example, may be considered as an ordered list of executable instructions configured to implement logical functions, and may be embodied in any computer-readable medium for use by an instruction execution system, apparatus or device (such as a computer-based system, a system including a processor or other systems that can fetch instructions from an instruction execution system, apparatus or device and execute the instructions), or used in combination with the instruction execution system, apparatus or device.

For the purposes of this specification, the "computer-readable medium" may be any apparatus that can contain, store, communicate, propagate, or transmit the program for use by an instruction execution system, apparatus, or device or used in conjunction with such instruction execution system, apparatus, or device.

The above implementations of the embodiments of the present disclosure do not constitute a limitation on the protection scope of the embodiments of the present disclosure.

## Claims

1. A control method, applied to a control system, wherein the control system comprises at least two end-side control devices, a master station device and a plurality of slave station devices, wherein the master station device comprises a security verification device;
the method comprises:
in response to a trigger operation from a user, transmitting an output signal of a first end-side control device among the at least two end-side control devices sequentially via at least one second end-side control device, wherein the output signal comprises an initial control signal, the first end-side control device is an end-side control device firstly triggered among the at least two end-side control devices, or an end-side control device located after an end-side control device firstly triggered; the at least one second end-side control device comprises an end-side control device located after the first end-side control device among the at least two end-side control devices;
in a case where an output signal of a last end-side control device among the at least two end-side control devices is received, performing, by the security verification device, security verification on an initial control signal in the output signal of the last end-side control device; and
in a case where the security verification is passed, sending, by the security verification device, a target control signal to each of the plurality of slave station devices according to the initial control signal, so that the plurality of slave station devices control respective robots according to the target control signal respectively.

2. The method of claim 1, wherein transmitting the output signal of the first end-side control device among the at least two end-side control devices sequentially via the at least one second end-side control device comprises:
transmitting, by the first end-side control device, a first initial control signal and a first reset signal to a next second end-side control device adjacent to the first end-side control device;
wherein the first initial control signal refers to an initial control signal from another device, and the first reset signal refers to a reset signal from the other device, the other device comprises a device in a previous signal transmission phase of an input device, and the input device is any one of the at least two end-side control devices.

3. The method of claim 2, wherein in response to the trigger operation from the user, transmitting the output signal of the first end-side control device sequentially via the at least one second end-side control device comprises:
performing, by the first end-side control device, an AND operation on the first initial control signal and a second initial control signal to obtain an initial control signal to be output after the AND operation, wherein the second initial control signal refers to an initial control signal generated by the first end-side control device in response to the trigger operation;
performing, by the first end-side control device, an OR operation on the first reset signal and a second reset signal to obtain a reset signal to be output after the OR operation, wherein the second reset signal refers to a reset signal generated by the first end-side control device in response to the trigger operation; and
transmitting the initial control signal to be output and the reset signal to be output to the next second end-side control device adjacent to the first end-side control device, wherein the output signal comprises the initial control signal to be output and the reset signal to be output.

4. The method of claim 1, wherein the output signal of the at least two end-side control devices comprises a first output initial control signal and a second output initial control signal;
wherein, performing, by the security verification device, the security verification on the initial control signal in the output signal comprises:
comparing whether a signal value of the first output initial control signal is the same as a signal value of the second output initial control signal; and
in a case where the signal value of the first output initial control signal is the same as the signal value of the second output initial control signal, determining that the security verification is passed.

5. The method of claim 1, wherein the control system further comprises a fault detection device, the fault detection device is connected to each end-side control device of the at least two end-side control devices and the master station device respectively;
the method further comprises:
in a process of generating the target control signal, obtaining an intermediate state signal set of the target control signal in the control system and communication signals between the master station device and the plurality of slave station devices, wherein the intermediate state signal set comprises input signals and output signals of each end-side control device of the at least two end-side control devices and the master station device;
detecting whether a signal corresponding to a target fault type in the intermediate state signal set and the communication signals comprises an abnormal signal, wherein the target fault type belongs to a preset fault type set; and
in a case where the signal corresponding to the target fault type comprises the abnormal signal, generating fault information according to the abnormal signal, wherein the fault information comprises descriptive information of the target fault type and a position of a fault in the control system.

6. The method of claim 5, wherein the preset fault type set comprises:
a first fault type, indicating a transmission interface fault existing in the at least two end-side control devices;
a second fault type, indicating a communication connection fault between the master station device and the plurality of slave station devices; and
a third fault type, indicating a control logic fault of any one of the at least two end-side control devices.

7. The method of claim 6, wherein in a case where the target fault type comprises the first fault type, detecting whether the signal corresponding to the target fault type in the intermediate state signal set and the communication signals comprises the abnormal signal comprises:
detecting whether the intermediate state signal set comprises the abnormal signal, wherein an input signal of each end-side control device in the intermediate state signal set comprises a first input initial control signal and a second input initial control signal;
wherein detecting whether the intermediate state signal set comprises the abnormal signal comprises:
determining whether the intermediate state signal set comprises the abnormal signal based on a signal value of a first input initial control signal and a signal value of a second input initial control signal corresponding to a target device among the at least two end-side control devices and the master station device;
in a case where the signal value of the first input initial control signal and the signal value of the second input initial control signal corresponding to the target device are different, determining that the intermediate state signal set comprises the abnormal signal, and determining the signal value of the first input initial control signal and/or the second input initial control signal as an abnormal signal in a signal corresponding to the first fault type.

8. The method of claim 7, wherein generating fault information according to the abnormal signal comprises:
generating first fault information according to the abnormal signal in the signal corresponding to the first fault type, wherein the first fault information comprises descriptive information of the first fault type and a first fault position;
wherein the descriptive information of the first fault type is that an interface is disconnected, and the first fault position comprises an input interface of the target device and an output interface of a pervious-level device of the target device.

9. The method of claim 6, wherein in a case where the target fault type comprises the second fault type, detecting whether the signal corresponding to the target fault type in the intermediate state signal set and the communication signals comprises the abnormal signal comprises:
detecting whether the communication signals comprise the abnormal signal;
wherein detecting whether the communication signals comprise the abnormal signal comprises:
in a case where a signal value of a communication signal between the master station device and a slave station device is a first preset threshold, determining that the communication signals comprise the abnormal signal.

10. The method of claim 9, wherein generating the fault information according to the abnormal signal comprises:
generating second fault information according to an abnormal signal in a signal corresponding to the second fault type, wherein the second fault information comprises the number of slave station devices with abnormal communication signals and identifications of the slave station devices with abnormal communication signals.

11. The method of claim 6, wherein in a case where the target fault type comprises the third fault type, detecting whether the signal corresponding to the target fault type comprises the abnormal signal comprises:
in a case where no abnormality is present in the input signals of the at least two end-side control devices and the at least two end-side control devices have no output signal, determining that the signal corresponding to the target fault type comprises the abnormal signal.

12. The method of claim 6, wherein the target fault type comprises at least one of the first fault type, the second fault type, or the third fault type.

13. The method of claim 1, further comprising:
after generating an emergency stop signal and a reset signal, performing, by the master station device, delay processing on the reset signal according to a preset delay duration to obtain a delayed reset signal, wherein the output signal comprises the emergency stop signal and the reset signal;
sending, by the master station device, a target emergency stop signal to the plurality of slave station devices, so that the plurality of slave station devices respectively perform emergency stop control according to a preset duration, wherein the target emergency stop signal is obtained according to the emergency stop signal, and the target control signal comprises the target emergency stop signal; and
in a case where a signal value of the emergency stop signal meets a reset trigger condition, responding, by the master station device and the plurality of slave station devices, to the delayed reset signal to reset.

14. The method of claim 13, wherein the preset delay duration is greater than or equal to 1 second.

15. The method of claim 13, wherein for a slave station device among the plurality of slave station devices, performing the emergency stop control according to the preset duration comprises:
controlling, by the slave station device, the target emergency stop signal to be effectively executed for a time period reaching the preset duration, wherein the preset duration is a sum of a duration of an emergency stop buffer delay and a duration during which a robot corresponding to the slave station device enters an emergency stop state.

16. The method of claim 15, wherein controlling, by the slave station device, the target emergency stop signal to be effectively executed for the time period reaching the preset duration comprises:
controlling, by the slave station device, the target emergency stop signal to be maintained at a low level state for the preset duration, so that the target emergency stop signal is effectively executed.

17. The method of claim 13, wherein the emergency stop signal comprises a first channel emergency stop signal and a second channel emergency stop signal; a signal value of the emergency stop signal meeting a reset trigger condition comprises:
both the first channel emergency stop signal and the second channel emergency stop signal being high level signals.

18. The method of claim 17, further comprising:
in response to the trigger operation from the user, obtaining, by at least one end-side control device of the at least two end-side control devices, a first initial emergency stop signal, a second initial emergency stop signal, and an initial reset signal;
transmitting, by the at least one end-side control device, the first initial emergency stop signal, the second initial emergency stop signal and the initial reset signal to the master station device through three channels in an order of a series connection, wherein the first channel emergency stop signal comprises the first initial emergency stop signal generated by the at least one end-side control device, the second channel emergency stop signal comprises the second initial emergency stop signal generated by the at least one end-side control device, and the reset signal comprises the initial reset signal generated by the at least one end-side control device.

19. The method of claim 17 or 18, further comprising:
in a case where a signal value of the first channel emergency stop signal and a signal value of the second channel emergency stop signal are the same, delaying the reset signal according to the preset delay duration.

20. A control system, comprising at least two end-side control devices, a master station device and a plurality of slave station devices, wherein the master station device comprises a security verification device;
the at least two end-side control devices are connected to each other in series, wherein an output signal of a first end-side control device is sequentially transmitted via at least one second end-side control device, and the output signal comprises an initial control signal, the first end-side control device is an end-side control device firstly triggered among the at least two end-side control devices, or an end-side control device located after an end-side control device firstly triggered; the at least one second end-side control device comprises an end-side control device located after the first end-side control device among the at least two end-side control devices;
the security verification device is connected to a last end-side control device among the at least two end-side control devices by wire, and is connected to the plurality of slave station devices wirelessly;
the security verification device is configured to perform security verification on an initial control signal in an output signal of the last end-side control device, and send a target control signal to each of the plurality of slave station devices after the security verification passes.

21. The control system of claim 20, wherein the at least two end-side control devices are connected to each other in series by way of the at least two end-side control devices being connected in sequence via a logic circuit;
the security verification device is connected to the last end-side control device by wire by way of the security verification device being connected to the last end-side control device via a logic circuit.

22. The control system of claim 21, wherein the logic circuit comprises an AND gate circuit and an OR gate circuit;
an input end of the AND gate circuit is connected to an output port of a first initial control signal of an input device, and an output end of the AND gate circuit is connected to an input port of the first initial control signal of an output device, wherein the first initial control signal refers to an initial control signal from another device;
an input end of the OR gate circuit is connected to an output port of a first reset signal of the input device, and an output end of the OR gate circuit is connected to an input port of the first reset signal of the output device, wherein the first reset signal refers to a reset signal from the other device;
wherein, the input device is any one of the at least two end-side control devices, the output device is a device among the at least two end-side control devices and the security verification device that receives a signal output by the input device, and the other device comprises a device in a previous signal transmission phase of the input device.

23. The control system of claim 22, wherein the input end of the AND gate circuit is further connected to an output port of a second initial control signal of the input device, the input end of the OR gate circuit is further connected to an output port of a second reset signal of the input device, the second initial control signal refers to an initial control signal generated by the input device, and the second reset signal refers to a reset signal generated by the input device.

24. The control system of any of claims 20-23, wherein the control system further comprises a fault detection device, the fault detection device is respectively connected to each end-side control device of the at least two end-side control devices and the master station device;
the fault detection device is configured to obtain an intermediate state signal set of the target control signal in the control system and communication signals between the master station device and the plurality of slave station devices, wherein the target control signal is obtained based on the initial control signal, and the intermediate state signal set comprises input signals and output signals of each end-side control device of the at least two end-side control devices and the master station device;
the fault detection device is further configured to detect whether a signal corresponding to a target fault type in the intermediate state signal set and the communication signals comprises an abnormal signal, wherein the target fault type belongs to a preset fault type set; and
the fault detection device is further configured to generate fault information according to the abnormal signal in a case where the signal corresponding to the target fault type comprises the abnormal signal, wherein the fault information comprises descriptive information of the target fault type and a position of a fault in the control system.

25. The control system of any of claims 20-23, wherein,
the master station device is configured to, after generating an emergency stop signal and a reset signal, perform delay processing on the reset signal according to a preset delay duration to obtain a delayed reset signal, and send a target emergency stop signal to at least two slave station devices; wherein the target emergency stop signal is obtained according to the emergency stop signal, and the target control signal comprises the target emergency stop signal; and
a slave station device is configured to receive the target emergency stop signal sent by the master station device, and perform emergency stop control according to a preset duration;
the master station device and the slave station device are further configured to respond to the delayed reset signal to reset in a case where a signal value of the emergency stop signal meets a reset trigger condition.

26. An electronic device, comprising: a memory and a processor;
wherein the memory is configured to store instructions executable by a computer, and
the processor is configured to read the instructions from the memory and execute the instructions to implement the method of any one of claims 7 to 25.

27. A computer-readable storage medium for storing computer program instructions, wherein when the computer program instructions are read by a computer, the method of any one of claims 7 to 25 is implemented.

28. A computer program product, comprising a computer program, wherein when the computer program is executed by a processor, the method of any one of claims 7 to 25 is implemented.
